# EUROPÄISCHE PATENTSCHRIFT

(11) **EP 3 612 478 B1**
(45) Veröffentlichungstag und Bekanntmachung des Hinweises auf die Patenterteilung: **06.03.2024**
(21) Anmeldenummer: 18712832.7
(22) Anmeldetag: 14.03.2018
(51) Int. Cl.: B65G 54/02, H02K 41/02, B60B 33/00, F16C 33/72, F16C 13/00

(54) **FÖRDEREINRICHTUNG UND LINEARTRANSPORTSYSTEM**
CONVEYING DEVICE AND LINEAR TRANSPORT SYSTEM
DISPOSITIF DE TRANSPORT ET SYSTÈME DE TRANSPORT LINÉAIRE

(30) Priorität: 21.04.2017 DE 102017108558
(43) Veröffentlichungstag der Anmeldung: 26.02.2020
(73) Patentinhaber: Beckhoff Automation GmbH, 33415 Verl (DE)
(72) Erfinder: NEUFELD, Jörg, 33104 Paderborn (DE); SINZENICH, Andreas, 33803 Steinhagen (DE); VORBOHLE, Thomas, 33397 Rietberg (DE)
(74) Vertreter: Patentanwaltskanzlei WILHELM & BECK
(86) Internationale Anmeldenummer: PCT/EP2018/056360
(87) Internationale Veröffentlichungsnummer: WO 2018/192720

(56) Entgegenhaltungen:
- EP-A2- 2 843 814
- DE-A1-102012 103 378
- DE-A1-102012 204 919
- DE-A1-102013 216 958
- DE-A1-102014 100 636
- DE-A1-102014 117 150
- FR-A- 1 389 193
- US-A- 4 113 328
- US-A- 5 632 589
- US-A1- 2003 230 941

## Beschreibung

Die Erfindung betrifft eine Fördereinrichtung gemäß Patentanspruch 1 und ein Lineartransportsystem gemäß Patentanspruch 14.

Diese Patentanmeldung beansprucht die Priorität der deutschen Patentanmeldung DE 10 2017 108 558.0.

Aus der EP 2 560 904 B1 ist eine Transportvorrichtung zur Beförderung eines Produkts bekannt, wobei die Transportvorrichtung eine Vielzahl von unabhängig voneinander bewegbaren Förderelementen zum Fördern von Produkten, eine ortsfeste, umlaufend angeordnete Laufschiene, welche einen Laufpfad mit wenigstens einer Laufbahn für das Förderelement definiert und eine Linearmotorantriebsvorrichtung zum Antreiben der Förderelemente umfasst, wobei jedes Förderelement Permanentmagnete aufweist, die mit Spulen der Linearantriebsvorrichtung in Wirkverbindung stehen und wobei jedes Förderelement wenigstens ein erstes Teilelement und ein zweites Teilelement aufweist, welche mittels Gelenke gelenkig miteinander verbunden sind. Jedes Förderelement weist einen modularen Aufbau auf und die einzelnen Teilelemente einen gleichen Grundaufbau. Die Transporteinrichtung weist zahlreiche Hinterschneidungen und Spalten auf und ist somit aufwändig zu reinigen. Aus DE 10 2013 216 958 A1 ist eine Transfervorrichtung, umfassend ein bewegbares Element, eine feststehende Laufschiene und eine Linearmotor-Antriebsvorrichtung zum Antreiben des bewegbaren Elements bekannt. Das bewegbare Element weist Abstützelemente auf, welche mit der Laufschiene in Kontakt bringbar sind. Das Abstützelement weist einen Kontaktbereich auf, welcher in einem ersten Winkel ungleich 90° zu einer Hochachse des bewegbaren Elements und in einem zweiten Winkel ungleich 90° zu einer Querachse des bewegbaren Elements angeordnet ist.

Aus DE 10 2012 103 378 A1 ist eine Transportvorrichtung zur Förderung von Produkten bekannt. Die Transportvorrichtung umfasst mehrere symmetrisch aufgebaute bewegbare Schlitten mit jeweils mehreren Permanentmagneten, eine umlaufende Laufschiene zur Führung der Schlitten und eine Linearmotor-Antriebsvorrichtung zum Antrieb der Schlitten.

Die DE 10 2012 204 919 A1 offenbart eine Fördereinrichtung nach dem Oberbegriff des Anspruchs 1. Aus der genannten Druckschrift ist zudem eine Statorvorrichtung für einen Linearmotor bekannt. Die Statorvorrichtung weist einen elektrisch bestrombaren Magnetfelderzeuger zum Bilden eines Magnetfeldes, ein Haltemodul zum Halten des Magnetfelderzeugers, wobei der Magnetfelderzeuger an dem Haltemodul befestigt ist, und eine von dem Haltemodul getrennt gebildete Aufnahmeeinrichtung zur Befestigung einer Führung zum Führen eines Fahrzeugs, wobei das Haltemodul an der Aufnahmeeinrichtung befestigt ist, auf.

Aus US 2003/230941 A1 ist ein weiteres Lineartransportsystem bekannt.

Aus WO 96/27544 ist eine Vorrichtung zum Transportieren von Produkten zwischen verschiedenen Stationen bekannt. Hierbei ist ein Wagen vorgesehen, welcher ein U-förmiges Joch aufweist, wobei an den Innenseiten des Jochs Permanentmagnete gebildet sind. Zwischen dem Joch sind mehrere Luftspulen angeordnet, welche auf eine Trägerplatte aufgesetzt sind. Bei einer elektrischen Bestromung der Luftspulen bildet sich ein Magnetfeld aus, welches mit dem entsprechenden Magnetfeld der Permanentmagnete des Jochs wechselwirkt, so dass der Wagen eine translatorische Bewegung erfährt. Die Luftspulen bilden einen Luftspalt zwischen den Permanentmagneten. Dieser Spalt muss gering gehalten werden um eine gute Kraftwirkung zu erzielen. Die mechanische Festigkeit steht dem entgegen und lässt keine gute Festigkeit zu. Die mechanische Führung kann so nicht mit der Spulenanordnung kombiniert werden. Ferner weisen Luftspulen den Nachteil hoher magnetischer Streuverluste auf, insbesondere bei größeren Abmessungen. In der Regel sind Luftspulen durch eine geringere Induktivität gekennzeichnet, was bei gleichem Aufbau und gleicher Ansteuerung zu einer geringeren Vorschubkraft führt.

Aus US 6,876,107 B2 ist ein Transportsystem bekannt. Hierbei ist ein Schlitten mit einem U-förmigen Joch vorgesehen, wobei an Innenseiten des U-förmigen Jochs Permanentmagnete angeordnet sind. Innerhalb des U-förmigen Jochs sind zwei gegenüberliegende Spulen gebildet. Bei einer entsprechenden Bestromung der Spulen bildet sich ein Magnetfeld aus, welches mit dem Magnetfeld der Permanentmagnete wechselwirkt, so dass der Schlitten eine translatorische Bewegung durchführt. Aufgrund der hohen Anzahl an benötigten Spulen weist ein derartiger Aufbau eine hohe Komplexität auf, was zu hohen Kosten für die Bauteile und deren Verdrahtung etc. führt. Zudem bedingt ein derartiger Aufbau einen erheblichen Bauraumbedarf.

So können sich beispielsweise bei Einsatz der Transportvorrichtung bei der Herstellung von Lebensmitteln oder der Verpackung von Lebensmitteln in den Spalten und Hinterschneidungen Lebensmittelpartikel mit Keimen absetzen. Die Lebensmittelpartikel dienen dabei Keimen als Nährboden. Werden bei der Reinigung der Transporteinrichtung nicht alle Lebensmittelpartikel entfernt, kann die Transporteinrichtung die Keime bei der Herstellung der Lebensmittel auf die weiteren herzustellenden Lebensmittel übertragen und diese mit den Keimen infizieren.

Es ist Aufgabe der Erfindung, eine verbesserte Fördereinrichtung und ein verbessertes Lineartransportsystem bereitzustellen.

Diese Aufgabe wird mittels einer Fördereinrichtung gemäß Patentanspruch 1 und eines Lineartransportsystems gemäß Patentanspruch 14 gelöst. Vorteilhafte Ausführungsformen sind in den abhängigen Ansprüchen angegeben.

Die Fördereinrichtung umfasst wenigstens eine Rolleinheit und eine Trägereinheit. Die Trägereinheit ist U-förmig ausgebildet und weist außenseitig eine Außenseite sowie innenseitig eine Innenseite auf, wobei die Innenseite einen Aufnahmeraum zur Aufnahme einer Laufschiene des Lineartransportsystems begrenzt, wobei die Rolleinheit beabstandet zu der Innenseite in dem Aufnahmeraum angeordnet ist, wobei die Innenseite und/oder die Außenseite glatt ausgebildet ist.

Die Fördereinrichtung weist eine Magnetanordnung auf, wobei die Trägereinheit eine Aufnahme aufweist, wobei in der Aufnahme die Magnetanordnung angeordnet ist. Die Aufnahme ist auf einer zu einem Antriebsmodul des Lineartransportsystems zugewandten Seite mittels eines weiteren Verschlusselements verschlossen, wobei das weitere Verschlusselement die Magnetanordnung abdeckt.

Dadurch wird ein Eindringen von aggressiven Reinigungsmedien, die dazu genutzt werden, um die Fördereinrichtung von Verschmutzungen zu befreien und gegebenenfalls zu desinfizieren, in die Trägereinheit vermieden. Durch die verbesserten Reinigungsmöglichkeiten werden Ablagerungsmöglichkeiten für Partikel, insbesondere Lebensmittelpartikel, die als Nährboden für Keime oder Pilze dienen können, zuverlässig entfernt. Ferner wird dadurch auf eine Keimübertragung auf ein Produkt, das mit der Fördereinrichtung transportiert und/oder verarbeitet wird, vermieden. Ebenso wird eine Anhaftung von Partikeln an der Fördereinrichtung reduziert bzw. vermieden, so dass Reinigungsintervalle zur Reinigung der Fördereinrichtung gegenüber bekannten Fördereinrichtungen verlängert sind.

Dadurch eignet sich die Fördereinrichtung für den Einsatz in der Lebensmittelindustrie oder der pharmazeutischen Industrie, da mit der Fördereinrichtung hohe Hygienezertifizierungsstandards besonders gut erfüllt werden können.

In einer weiteren Ausführungsform weist die Trägereinheit einen Träger mit einem ersten Trägerabschnitt und wenigstens einem zweiten Trägerabschnitt auf, wobei der zweite Trägerabschnitt geneigt zu dem ersten Trägerabschnitt angeordnet ist und mit dem ersten Trägerabschnitt verbunden ist, wobei die Innenseite an dem ersten Trägerabschnitt und an dem zweiten Trägerabschnitt abschnittsweise plan ausgebildet ist, wobei die Innenseite zwischen dem ersten Trägerabschnitt und dem zweiten Trägerabschnitt derart gekrümmt ausgebildet ist, dass die Innenseite stufenlos zwischen dem ersten Trägerabschnitt und dem zweiten Trägerabschnitt übergeht. Dadurch wird eine erleichterte Reinigung zusätzlich ermöglicht. Ferner wird eine Partikelansammlung vermieden - insbesondere in schwer zu reinigenden Bereichen an Stößen, Ecken oder Hinterschneidungen - auf denen sich Keime oder Pilze anlagern können.

In einer weiteren Ausführungsform ist der Träger U-förmig und spiegelsymmetrisch ausgebildet und weist wenigstens einen dritten Trägerabschnitt und einen vierten Trägerabschnitt auf, wobei der dritte Trägerabschnitt auf einer zum ersten Trägerabschnitt abgewandten Seite des zweiten Trägerabschnitts angeordnet und mit dem zweiten Trägerabschnitt verbunden ist, wobei der dritte Trägerabschnitt geneigt zu dem ersten Trägerabschnitt und zweiten Trägerabschnitt angeordnet ist, wobei der vierte Trägerabschnitt auf einer zum zweiten Trägerabschnitt abgewandten Seite des dritten Trägerabschnitts angeordnet und mit dem dritten Trägerabschnitt verbunden ist. Der vierte Trägerabschnitt ist geneigt zu dem dritten Trägerabschnitt angeordnet, wobei der zweite Trägerabschnitt und der vierte Trägerabschnitt auf einer zum Aufnahmeraum zugewandten Seite des dritten Trägerabschnitts angeordnet sind, wobei der vierte Trägerabschnitt auf einer zum ersten Trägerabschnitt abgewandten Seite eine Aufnahmeöffnung des Aufnahmeraums begrenzt, wobei die Innenseite sich über die Trägerabschnitt hin innenseitig erstreckt und stufenlos ausgebildet ist. Dadurch kann die Fördereinrichtung besonders gut an der Laufschiene befestigt werden und weist gleichzeitig einen kompakten und gut zu reinigen Aufbau auf.

In einer weiteren Ausführungsform umfasst die Fördereinrichtung eine Lageranordnung, wobei die Lageranordnung die Rolleinheit drehbar um eine Drehachse an der Trägereinheit lagert, wobei die Rolleinheit einen Rollkörper, ein Verschlusselement und einen Lagerraum umfasst, wobei der Rollkörper eine Lauffläche umfangsseitig aufweist und innenseitig den Lagerraum begrenzt, wobei in dem Lagerraum die Lageranordnung angeordnet ist, wobei die Lauffläche ausgebildet ist, an einer Schienenlauffläche der Laufschiene des Lineartransportsystems anzuliegen und die Fördereinrichtung entlang der Laufschiene zu führen, wobei das Verschlusselement stirnseitig mit dem Rollkörper verbunden ist und stirnseitig den Lagerraum gegenüber einer Umgebung abdichtet.

In einer weiteren Ausführungsform ist das Verschlusselement kuppelförmig ausgebildet und bedeckt den Rollkörper stirnseitig vollständig. Dadurch wird, insbesondere bei der Reinigung der Fördereinrichtung, vermieden, dass Schmierstoffe aus der Lageranordnung austreten und gegebenenfalls die Trägereinheit verunreinigen.

In einer weiteren Ausführungsform sind der Rollkörper und Verschlusselement außenseitig frei von Hinterschneidungen und/oder Ecken und/oder Stößen und/oder sind im Wesentlichen glatt ausgebildet.

In einer weiteren Ausführungsform weist die Rolleinheit ein erstes Dichtelement auf, wobei das erste Dichtelement den Lagerraum auf einer zum Verschlusselement abgewandten Seite des Rollkörpers verschließt. Dadurch ist der Lagerraum gegenüber einer Umgebung hermetisch abgedichtet. Dadurch kann auch auf dieser Seite ein Eindringen von Medien in den Lagerraum, die zum einen zur Verschmutzung der Fördereinrichtung und zum anderen zur Beschädigung der Lageranordnung führen können, vermieden werden. Ferner kann die Lageranordnung besonders kostengünstig ausgebildet sein. Des Weiteren wird eine Keimbildung im Lagerraum vermieden.

In einer weiteren Ausführungsform weist das erste Dichtelement radial innenseitig eine erste Dichtfläche, radial außenseitig eine zweite Dichtfläche und eine Dichtaußenfläche auf, wobei die erste Dichtfläche an einem Befestigungsmittel, das die Lageranordnung an der Trägereinheit befestigt, anliegt, wobei die zweite Dichtfläche am Rollkörper innenseitig anliegt, wobei die Dichtaußenfläche auf einer zum Lagerraum abgewandten Seite des ersten Dichtelements angeordnet ist, wobei die Dichtaußenfläche derart ausgestaltet ist, dass ein erster Übergang zwischen dem Befestigungsmittel und der Dichtaußenfläche sowie ein zweiter Übergang zwischen einer dem ersten Dichtelement zugewandten Stirnfläche des Rollkörpers und der Dichtaußenfläche im Wesentlichen stufenlos ist, wobei die Dichtaußenfläche im Wesentlichen konkav bezogen auf den Lagerraum ausgebildet ist. Von besonderem Vorteil ist hierbei, wenn das erste Dichtelement an der ersten Dichtfläche in axialer Richtung bezogen auf die Drehachse breiter ausgebildet ist als an der zweiten Dichtfläche.

In einer weiteren Ausführungsform umfasst die Trägereinheit ein zweites Dichtelement, wobei zwischen dem Träger und dem Befestigungsmittel das zweite Dichtelement angeordnet ist, wobei das zweite Dichtelement den Träger und das Befestigungsmittel gegenüber der Umgebung abdichtet. Dadurch wird eine Verunreinigung innenseitig der Trägereinheit zuverlässig vermieden. Ferner wird dadurch eine Keimbildung in einem Trägerinnneraum des Trägers vermieden.

In einer weiteren Ausführungsform ist zwischen der Rolleinheit und der Trägereinheit ein Spalt angeordnet, wobei der Spalt eine Spaltbreite in axialer Richtung bezogen auf die Drehachse aufweist, wobei die Spaltbreite derart gewählt ist, das eine mechanische Reinigungseinrichtung, beispielsweise eine Bürste oder ein Lappen, zur mechanischen Reinigung des Spalt in den Spalt einführbar ist. Dadurch kann die Fördereinrichtung besonders einfach mechanisch gereinigt werden.

In einer weiteren Ausführungsform umfasst der Spalt einen radial innenseitig angeordneten Verrundungsabschnitt wobei der Verrundungsabschnitt im Wesentlichen durch das erste Dichtelement und das zweite Dichtelement begrenzt wird, wobei der Verrundungsabschnitt einen Radius aufweist, wobei der Radius zumindest 4 mm, vorzugsweise wenigstens 6 mm, beträgt. Durch den großen Abstand der Rolleinheit zu der Trägereinheit kann der Spalt mittels Wasserstrahl ohne zusätzliche mechanische Hilfsmittel gereinigt werden. Zusätzlich kann der Spalt auch mechanisch gereinigt werden.

In einer weiteren Ausführungsform weist die Trägereinheit ein Halteelement und ein weiteres Dichtelement auf, wobei in dem Halteelement die Aufnahme angeordnet ist, wobei zwischen dem Halteelement und dem Träger das weitere Dichtelement angeordnet ist. Dadurch wird ein Eindringen von korrosiven Medien in die Trägereinheit zwischen dem Halteelement und dem Träger zuverlässig vermieden, so dass eine Verunreinigung innenseitig der Trägereinheit zuverlässig vermieden werden kann. Ferner wird eine Keimbildung in dem Trägerinnneraum des Trägers vermieden.

In einer weiteren Ausführungsform weist die Fördereinrichtung eine Fahne auf, wobei die Fahne ein Gehäuse und einen Signalbeeinflusser umfasst, wobei das Gehäuse einen Gehäuseinnenraum aufweist, in dem der Signalbeeinflusser angeordnet ist. Das Gehäuse weist einen Rahmen und wenigstens ein Abdeckelement auf. Der Rahmen begrenzt abschnittsweise den Gehäuseinnenraum, wobei das Abdeckelement seitlich an dem Rahmen angeordnet ist und den Gehäuseinnenraum verschließt.

In einer weiteren Ausführungsform ist das Abdeckelement dünnwandig, vorzugsweise folienartig, ausgebildet. Das Abdeckelement weist vorzugsweise eine Dicke in einem Bereich von 0,1 mm bis 0,8 mm µm auf. Das Abdeckelement ist vorzugweise stoffschlüssig mit dem Rahmen verbunden, vorzugsweise verklebt.

In einer weiteren Ausführungsform sind der Rahmen und das Halteelement einstückig und materialeinheitlich ausgebildet. In einer weiteren Ausführungsform weist der Träger und/oder das Befestigungsmittel und/oder wenigstens einen der folgenden ersten Werkstoffe auf: Edelstahl, insbesondere V4A-Stahl, Kunststoff, Polyethylen, Polytetrafluorethylen; wobei die Rolleinheit und/oder das Verschlusselement wenigstens einen der folgenden zweiten Werkstoffe aufweist: Kunststoff, Polyketon; wobei das erste und/oder zweite Dichtelement wenigstens einen der folgenden dritten Werkstoffe aufweist: Kunststoff, Polytetrafluorethylen, Fluorkautschuk, wobei das Abdeckelement wenigstens einen der folgenden vierten Werkstoffe aufweist: Kunststoff, Polyester, Nichtmetall, unmagnetisches Material.

Das Lineartransportsystem nach Anspruch 14 weist ein Antriebsmodul, eine Laufschiene und eine Fördereinrichtung auf, wobei die Fördereinrichtung wie oben beschrieben ausgebildet ist. Die Laufschiene weist wenigstens eine Schienenlauffläche auf. Die Lauffläche liegt auf der Schienenlauffläche auf und die Laufschiene führt die Fördereinrichtung in einer Bewegung. Zumindest abschnittsweise umgreift die Trägereinheit die Laufschiene und das Antriebsmodul.

Das Antriebsmodul weist ein Steuergerät und einen Stator mit einer Vielzahl von Wicklungen auf, wobei das Steuergerät mit den Wicklungen verbunden und ausgebildet ist, die Wicklungen derart anzusteuern, dass der Stator schaltbar ein magnetisches Wanderfeld bereitstellt. Das Wanderfeld steht in Wirkverbindung mit der Magnetanordnung und das Wanderfeld bewegt die Fördereinrichtung entlang der Laufschiene.

Nachfolgend wird die Erfindung anhand von Figuren näher erläutert. Dabei zeigen:
Figur 1 eine perspektivische Darstellung eines Lineartransportsystems;
Figur 2 einen Ausschnitt des in Figur 1 gezeigten Lineartransportsystems;
Figur 3A eine Draufsicht auf das in Figur 1 dargestellte Lineartransportsystem;
Figur 3B einen Querschnitt entlang einer in Figur 3A gezeigten Schnittebene A-A durch das in Figur 1 gezeigte Lineartransportsystem;
Figur 4 eine Schnittansicht entlang der in Figur 3A gezeigten Schnittebene A-A durch einen Träger einer Fördereinrichtung des Lineartransportsystems;
Figur 5 eine perspektivische Darstellung des in Figur 4 gezeigten Trägers;
Figur 6 einen Teilquerschnitt entlang der in Figur 3A gezeigten Schnittebene A-A durch die Fördereinrichtung;
Figur 7 einen Ausschnitt des in Figur 5 gezeigten Teilquerschnitts der Fördereinrichtung; und
Figur 8 eine perspektivische Darstellung einer Fahne.

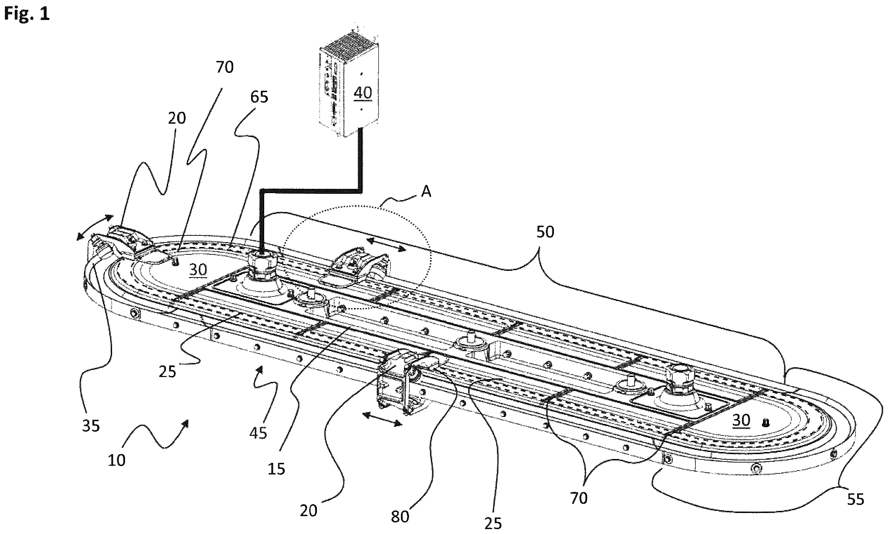

Figur 1 zeigt eine perspektivische Darstellung eines Lineartransportsystems 10.

Das Lineartransportsystem 10 weist mehrere identisch zueinander ausgebildete Fördereinrichtungen 20, wenigstens ein erstes Antriebsmodul 25, fakultativ wenigstens ein zweites Antriebsmodul 30 und eine Laufschiene 35 auf. Innenseitig sind die Antriebsmodule 25, 30 mit einem Maschinenbett 15 verbunden. Außenseitig ist umlaufend an den Antriebsmodulen 25, 30 die Laufschiene 35 angeordnet. Die Fördereinrichtung 20 ist an der Laufschiene 35 befestigt und umgreift teilweise das Antriebsmodul 25, 30.

Die Fördereinrichtung 20 ist gegenüber der Laufschiene 35 und dem Antriebsmodul 25, 30 bewegbar. In ihrer Bewegung wird die Fördereinrichtung 20 durch die Laufschiene 35 geführt. Dabei werden Kräfte, unter anderem auch Haltekräfte zum Transport eines Objekts an der Fördereinrichtung 20, von der Fördereinrichtung 20 an der Laufschiene 35 abgestützt. Die Kräfte werden von der Laufschiene 35 über das Antriebsmodul 25, 30 am Maschinenbett 15 abgestützt.

Das Lineartransportsystem 10 weist ferner ein Steuergerät 40 und eine Antriebsreinrichtung 45 auf. Das Steuergerät 40 ist mit den Antriebsmodulen 25, 30 verbunden.

In der Ausführungsform erstreckt sich das erste Antriebsmodul 25 und ein an dem ersten Antriebsmodul 25 angeordneter erster Führungsschienenabschnitt 50 in einer Längsrichtung. Ein zweiter Führungsschienenabschnitt 55 ist halbkreisförmig ausgebildet, wobei korrespondierend zu der Ausgestaltung des zweiten Führungsschienenabschnitts 55 das zweite Antriebsmodul 30 halbkreisförmig ausgebildet und angeordnet ist.

In der hier dargestellten Ausführungsform sind pro Seite jeweils vier erste Antriebsmodule 25 in einer Reihe nebeneinander angeordnet, wobei an einem vorderen und hinteren Ende der Reihe der ersten Antriebsmodule 25 jeweils das zweite Antriebsmodul 30 angeordnet ist. Somit ergibt sich eine geschlossene, annähernd oval ausgebildete Form des Lineartransportsystems 10. Selbstverständlich können auch eine beliebige andere Anzahl an ersten Antriebsmodulen 25 und/oder anders geformte, insbesondere nur einen Winkelbereich von 22,5° oder 45° oder 90° oder einen beliebigen anderen Winkelbereich umfassende, zweite Antriebsmodule 30 zu einem erfindungsgemäßen Lineartransportsystem 10 zusammengesetzt werden. Dabei ist es noch nicht einmal zwingend erforderlich, dass dieses Lineartransportsystem 10 eine umlaufende geschlossene Kontur bildet.

Die Antriebsreinrichtung 45 ist als Linearmotor ausgebildet, wobei die Antriebsreinrichtung 45 einen Stator 65 (strichliert dargestellt) und für jede Fördereinrichtung 20 eine Magnetanordnung 80 aufweist. Der Stator 65 verteilt sich auf die Antriebsmodule 25, 30, wobei jedes Antriebsmodul 25, 30 eine Statoreinheit 70 aufweist.

Die Statoreinheit 70 umfasst eine Vielzahl von getrennt voneinander bestrombare Spulen. In der Ausführungsform sind mehrere Spulen in dem Antriebsmodul 25, 30 nebeneinander angeordnet. Das Steuergerät 40 ist mit der Statoreinheit 70 elektrisch verbunden. Jedes Antriebsmodul 25, 30 ist mit der Laufschiene 35 verbunden. Dabei sind die Spulen in einer Reihe parallel verlaufend zu der Laufschiene 35 angeordnet.

Die Magnetanordnung 80 ist an der Fördereinrichtung 20 angeordnet. Die Magnetanordnung 80 ist jeweils seitlich des Stators 65 angeordnet.

Das Steuergerät 40 ist ausgebildet, einen Spulenstrom durch eine vordefinierte Anzahl von Spulen, also ein Stromfluss durch die vordefinierte Anzahl von Spulen, zu variieren. Der Spulenstrom erzeugt ein magnetisches Wanderfeld das mit der Magnetanordnung 80 wechselwirkt.

Das Steuergerät 40 ist dazu ausgebildet, die Bewegung der Fördereinrichtung 20 entlang der Laufschiene 35 zu steuern. Dabei steuert bzw. regelt das Steuergerät 40 die Spulenströme durch die Spulen derart, dass über die Wechselwirkung der Magnetanordnung 80 mit dem durch die Spulenströme erzeugten magnetischen Wanderfeld eine entlang bzw. längs des Antriebsmoduls 25, 30 gerichtete Kraft auf die Fördereinrichtung 20 ausgeübt wird. Dadurch kann jede Fördereinrichtung 20 eine zur anderen Fördereinrichtung 20 unterschiedliche Bewegung, beispielsweise eine unterschiedliche Bewegungsrichtung und/oder Beschleunigung und/oder Geschwindigkeit, durchführen.

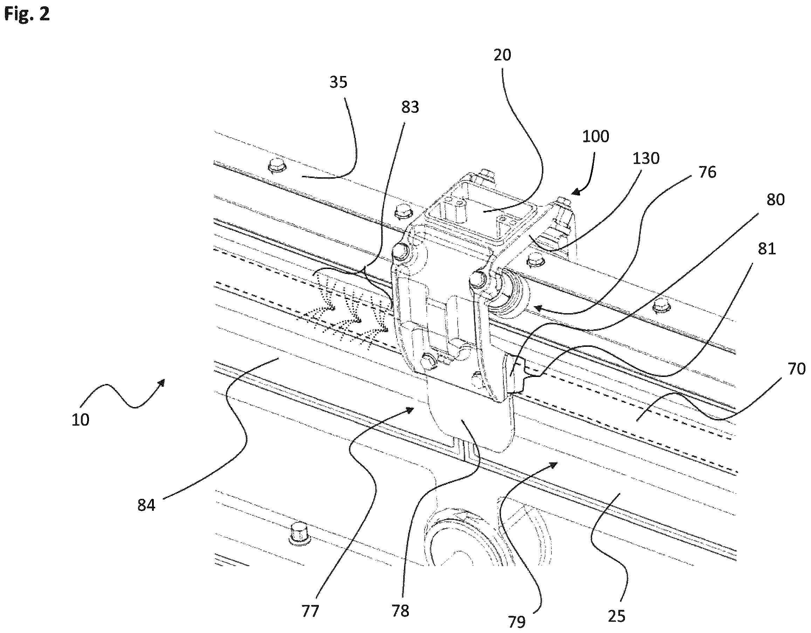

Figur 2 zeigt den Ausschnitt A des in Figur 1 gezeigten Lineartransportsystems 10 in einer in Richtung des Betrachters gekippten Lage.

Die Fördereinrichtung 20 weist eine Trägereinheit 100 mit einem Träger 130 und eine Führungsanordnung 76 auf. Der Träger 75 ist U-förmig, vorzugsweise Hufeisen-förmig, ausgebildet und umgreift sowohl die Laufschiene 35 als auch einen außenseitigen Abschnitt des ersten Antriebsmoduls 25. Die Führungsanordnung 76 ist mit dem Träger 75 verbunden und positioniert die Fördereinrichtung 20 an der Laufschiene 35.

Zusätzlich umfasst das Lineartransportsystem 10 eine Positionserfassungseinrichtung 77. Die Positionserfassungseinrichtung 77 umfasst eine Fahne 78, die an einem Ende der Trägereinheit 100 angeordnet ist, und eine Ermittlungseinrichtung (in Figur 2 in dem Antriebsmodul 25 verdeckt angeordnet). Die Fahne 78 ist plattenförmig ausgebildet. Beispielsweise ist die Fahne 78 beabstandet zu einer Außenseite 79 des ersten Antriebsmoduls 25 angeordnet.

Die Magnetanordnung 80 ist mit der Trägereinheit 100 verbunden. Angrenzend an die Fahne 78 umfasst die Magnetanordnung 80 einen ersten Magnetanordnungsabschnitt 81. Auf der dem Magnetanordnungsabschnitt 81 in einer Querrichtung, die senkrecht zur Längsrichtung ausgerichtet ist, gegenüberliegenden Seite umfasst die Magnetanordnung 80 einen zweiten Magnetanordnungsabschnitt, der hier durch die Laufschiene 35 und Teile des ersten Antriebsmoduls 25 verdeckt wird. Jeder Magnetanordnungsabschnitt 81 kann ein oder mehrere Permanentmagneten, die beispielsweise in einer Reihe parallel zur Laufschiene 20 angeordnet sind, aufweisen.

Bei Aktivierung stellt die Statoreinheit 70 je nach Ansteuerung durch das Steuergerät 40 ein Wanderfeld 83 (in Figur 2 mittels Magnetfeldlinien symbolisch dargestellt) bereit. Das Wanderfeld 83 bildet mit der Magnetanordnung 80 einen magnetischen Schluss. Das Steuergerät 40 kann die Statoreinheit 70 derart angsteuern, dass das Wanderfeld 83 parallel zur Laufschiene 35 bewegt wird. Durch die Kopplung der Magnetanordnung 80 mit dem Wanderfeld 83 wird die Fördereinrichtung 20 in der Bewegung des Wanderfelds 83 mitgenommen.

Das Antriebsmodul 25, 30 umfasst ein Gehäuse 84. In dem Gehäuse 84 ist die Statoreinheit 70 angeordnet. Das Gehäuse 84 weist wenigstens einen der folgenden ersten Werkstoffe auf: einen lebensmitteltechnisch hygienischen Werkstoff, Edelstahl, insbesondere einen V4A-Stahl Kunststoff, Polyethylen, Polytetrafluorethylen.

Das Gehäuse 84 ist außenseitig im Wesentlichen glatt. Dabei wird außenseitig an dem Gehäuse 84 auf Hinterschneidungen, (scharfkantige) Stöße, Vertiefungen oder Ähnliches verzichtet, so dass Anhaftungen von Verschmutzungen, beispielsweise Lebensmittelresten, besonders leicht von dem Gehäuse 84 entfernt werden können.

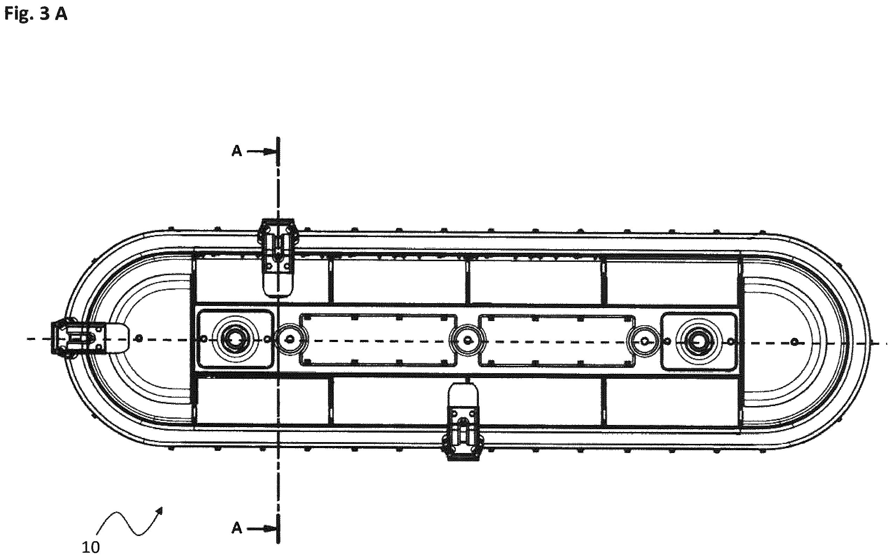

Figur 3A zeigt eine Draufsicht das in Figur 1 dargestellte Lineartransportsystem 10.

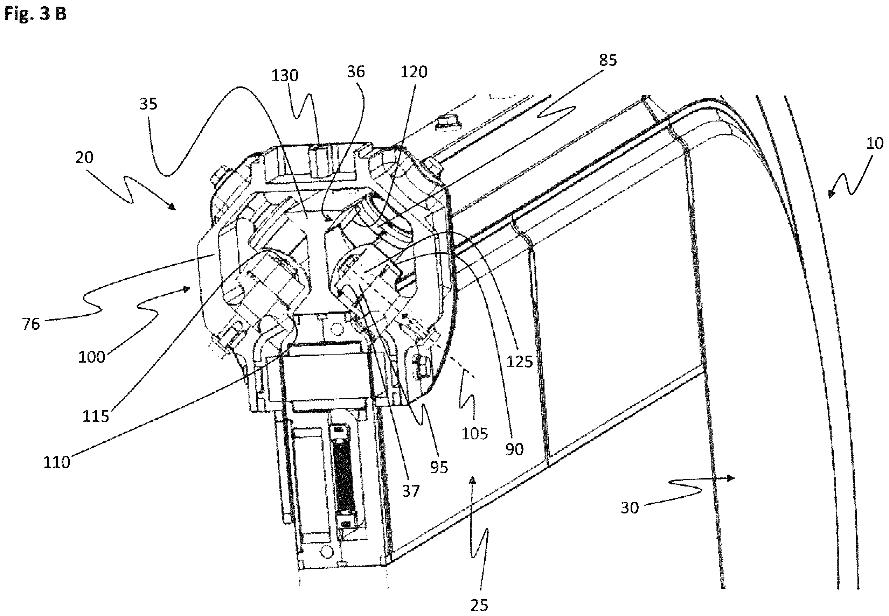

Figur 3B zeigt einen Querschnitt entlang einer in Figur 3A gezeigten Schnittebene A-A durch das in Figur 3A gezeigte Lineartransportsystem 10. Der Übersichtlichkeit halber sind die Schnittflächen nicht mit entsprechenden Schraffierungen versehen worden.

Die Laufschiene 35 weist in der Ausführungsform vier Schienenlaufflächen 36, 37 auf, die beidseitig der Laufschiene 35 angeordnet sind. In der Ausführungsform ist die Laufschiene 35 doppel-T-artig ausgebildet, wobei auf jeweils zugewandten Seiten eines T-Abschnitts der Laufschiene 35 die erste und zweite Schienenlauffläche 36, 37 angeordnet sind.

Die Führungsanordnung 76 weist in der Ausführungsform wenigstens eine erste Rolleinheit 85, eine zweite Rolleinheit 90 und wenigstens eine zur Rolleinheit 85, 90 jeweils zugeordnete Lageranordnung 95 auf.

In der Ausführungsform weist die Führungsanordnung 76 vier erste Rolleinheiten 85 und zwei zweite Rolleinheiten 90 auf, wobei aufgrund der geschnittenen Darstellung nur zwei der ersten Rolleneinheiten 85 und die beiden zweiten Rolleneinheiten in einer geschnittenen Form dargestellt sind. Auch eine andere Anzahl von Rolleinheiten 85, 90 ist denkbar. Die Rolleinheiten 85, 90 sind in der Ausführungsform identisch ausgebildet, sind jedoch in unterschiedliche Richtungen geneigt angeordnet. Jede der Rolleinheiten 85, 90 ist mittels der Lageranordnung 95 drehbar um eine Drehachse 105 an der Trägereinheit 100 drehbar gelagert.

Jede Rolleinheit 85, 90 weist einen Rollkörper 110 und ein Verschlusselement 115 auf. Der Rollkörper 110 weist radial außenseitig bezogen auf die Drehachse 105 eine Lauffläche 120 auf. Radial innenseitig begrenzt in Umfangsrichtung der Rollkörper 110 einen Lagerraum 125. In dem Lagerraum 125 ist die Lageranordnung 95 angeordnet. Die Lageranordnung 95 ist in der Ausführungsform als Wälzlager ausgebildet. Selbstverständlich kann die Lageranordnung 95 auch andersartig ausgebildet sein. Dabei legt die Lageranordnung 95 sowohl eine axiale Position als auch die radiale Position des Rollkörpers 110 fest.

In der Ausführungsform liegt die Lauffläche 120 der ersten Rolleinheit 85 an der ersten Schienenlauffläche 36 und die Lauffläche 120 der zweiten Rolleinheit 90 an der zweiten Schienenlauffläche 37 an. Durch die geneigte Anordnung der ersten Rolleinheit 85 und der ersten Schienenlauffläche 36 zu der zweiten Rolleinheit 90 und der zweiten Schienenlauffläche 37 kann zuverlässig eine Führung der Fördereinrichtung 20 sichergestellt werden. Insbesondere kann auch eine Drehmomentabstützung um die Längsrichtung der Fördereinrichtung 20 in die Laufschiene 35 sichergestellt werden. Dadurch kann die Fördereinrichtung 20 beispielsweise einseitig an der Fördereinrichtung 20 angeordnete Lasten zuverlässig transportieren und/oder können hohe Kurvengeschwindigkeiten, insbesondere im Bereich des zweiten Antriebsmoduls 30 und des zweiten Laufschienenabschnitts 55 sichergestellt werden. Dadurch sind kurze Förderzeiten zur Förderung von Objekten sichergestellt.

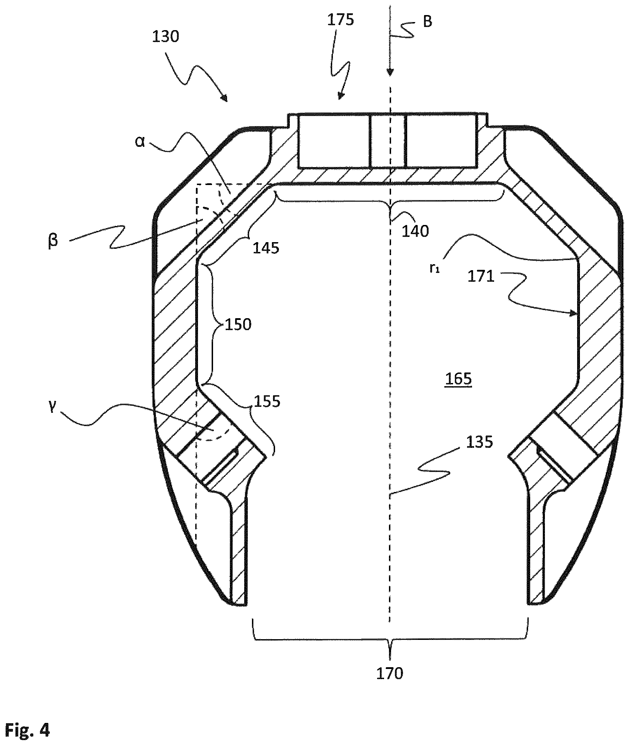

Figur 4 zeigt einen vergrößerten Querschnitt durch den Träger 130 der Fördereinrichtung 20.

Der Träger 130 ist in der Ausführungsform spiegelsymmetrisch zu einer Symmetrieebene 135 ausgebildet, so dass im Folgenden im Wesentlichen nur auf eine der beiden Seiten des Trägers 130 eingegangen wird. Auch kann der Träger 130 asymmetrisch ausgebildet sein.

Der Träger 130 ist im Wesentlichen Hufeisen-förmig ausgebildet, wobei die Öffnung, im Folgenden als Aufnahmeöffnung 170 bezeichnet, des Hufeisens wie dargestellt nach Unten weist. Gegenüberliegend der Aufnahmeöffnung 170 weist der Träger 130 einen ersten Trägerabschnitt 140 auf. An diesen ersten Trägerabschnitt 140 grenzen ein zweiter Trägerabschnitt 145, ein dritter Trägerabschnitt 150 und ein vierter Trägerabschnitt 155 an. Der erste Trägerabschnitt 140 ist mit dem zweiten Trägerabschnitt 145 verbunden. Auf einer gegenüberliegenden Seite zum ersten Trägerabschnitt 140 ist der zweite Trägerabschnitt 145 mit dem dritten Trägerabschnitt 150 verbunden. Der dritte Trägerabschnitt 150 ist auf einer zum zweiten Trägerabschnitt 145 abgewandten Seite mit dem vierten Trägerabschnitt 155 verbunden.

Der erste Trägerabschnitt 140 ist senkrecht zu der Symmetrieebene 135 angeordnet. Der zweite Trägerabschnitt 145 ist in der Ausführungsform in einem ersten Winkel α schräg geneigt zu dem ersten Trägerabschnitt 140 angeordnet. Vorzugsweise beträgt der erste Winkel α = 45°. Der dritte Trägerabschnitt 150 ist seinerseits schräg in einem zweiten Winkel β zum zweiten Trägerabschnitt 145 angeordnet. Vorzugsweise beträgt der zweite Winkel β = 45°. Dadurch ist der dritte Trägerabschnitt 150 senkrecht zum ersten Trägerabschnitt 140 angeordnet.

Der vierte Trägerabschnitt 155 ist schräg in einem dritten Winkel γ geneigt zu dem dritten Trägerabschnitt 150 angeordnet und erstreckt sich nach innen hin in Richtung der Symmetrieebene 135. Der dritte Winkel γ beträgt 45°. Der vierte Trägerabschnitt 155 ist ferner senkrecht zum zweiten Trägerabschnitt 145 ausgerichtet. Durch die symmetrische Ausgestaltung des Trägers 130 zu der Symmetrieebene 135 weist der Träger 130 eine U-förmige, insbesondere eine Hufeisen-förmige Ausgestaltung auf.

Durch die symmetrische Ausgestaltung weist der Träger 130 einen weiteren zweiten Trägerabschnitt 145, einen weiteren dritten Trägerabschnitt 150 und einen weiteren vierten Trägerabschnitt 155 auf. Die weiteren Trägerabschnitte 145, 150, 155 sind spiegelsymmetrisch zur Symmetrieebene 135 jeweils gegenüberliegend zu den Trägerabschnitte 140, 145, 150, 155 angeordnet.

Der Träger 130 begrenzt mit den Trägerabschnitten 140, 145, 150, 155 an einer Innenseite 171 einen Aufnahmeraum 165. In dem Aufnahmeraum 165 ist in montiertem Zustand der Fördereinrichtung 20 an dem Antriebsmodul 25, 30 die Laufschiene 35 und ein Abschnitt des Antriebsmoduls 25, 30 angeordnet.

Die Innenseite 171 ist glatt ausgebildet. Beispielhaft ist die Innenseite 171 am Trägerabschnitt 140, 145, 150, 155 abschnittsweise plan ausgebildet. An den Übergängen zwischen den einzelnen Trägerabschnitten 140, 145, 150, 155 ist die Innenseite 171 jeweils mit einem ersten Radius r1 derart verrundet, dass die Innenseite 171 stufenlos ausgebildet ist und frei von Hinterschneidungen und/oder Kanten und/oder Ecken und/oder Stößen ist. Der erste Radius r1 weist einen Wert auf, der in einem Bereich von 4 mm bis 30 mm, insbesondere in einem Bereich von 6 mm bis 15 mm, liegt. Außenseitig weist der Träger 130 am ersten Trägerabschnitt 140 ein Anschlussmittel 175 auf, um an dem Träger 130 weitere Komponenten der Fördereinrichtung 20 zu befestigen. Das Anschlussmittel 175 ist in montiertem Zustand der Fördereinrichtung 10 durch am Anschlussmittel 175 befestigte Komponenten verdeckt.

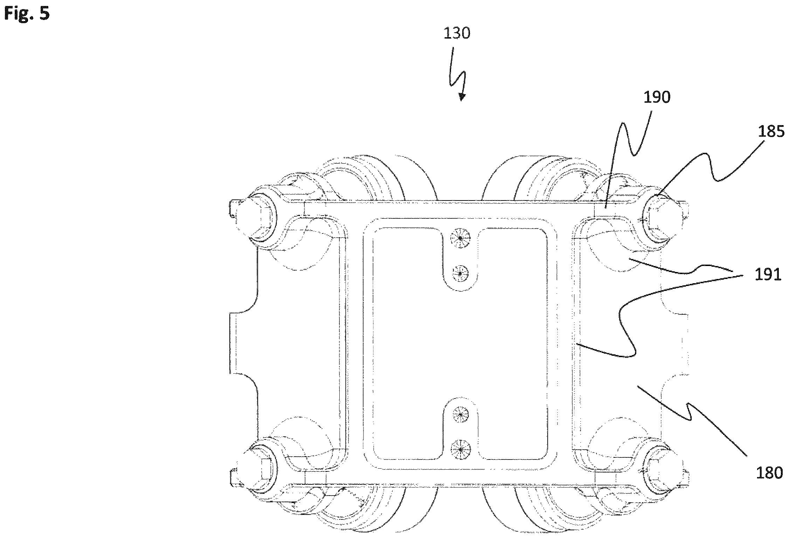

Figur 5 zeigt eine perspektivische Draufsicht des Trägers 130 in Richtung B gemäß Figur 4.

Eine Außenseite 180 des Trägers 130 ist ebenso wie die Innenseite 171 glatt ausgebildet. Hierbei wird unter glatt verstanden, dass die Innenseite 171 und die Außenseite 180 jeweils einen Mittelrauwert aufweist, wobei der Mittelrauwert in einem Bereich von 0,2 µm bis 0,8 µm, insbesondere in einem Bereich von 0,4 µm bis 0,8 µm, liegt. Ferner ist die Außenseite 180 frei von Hinterschneidungen und/oder Kanten und/oder Ecken und/oder Stößen. Dadurch kann der Träger 130 besonders leicht gereinigt werden. Der Träger 130 ist bespielhaft gewichtsoptimiert ausgebildet. Dabei weist der Träger 130 an der Außenseite 180 wenigstens ein als Konstruktionselement ausgebildete Buchse 185 und/oder Steg 190 auf. Die Buchse 185 und der Steg 190 ragen hervor und weisen einen Übergangsbereich 191 am festen Ende auf.

Der Verzicht auf Hinterschneidungen, Ecken und Kanten kann dadurch erzielt werden, der Übergangsbereich 191 zwischen einzelnen Konstruktionselementen jeweils verrundet ist. Dadurch wird eine leichte Reinigung des Trägers 130, beispielsweise auch in einer Spülmaschine, ermöglicht.

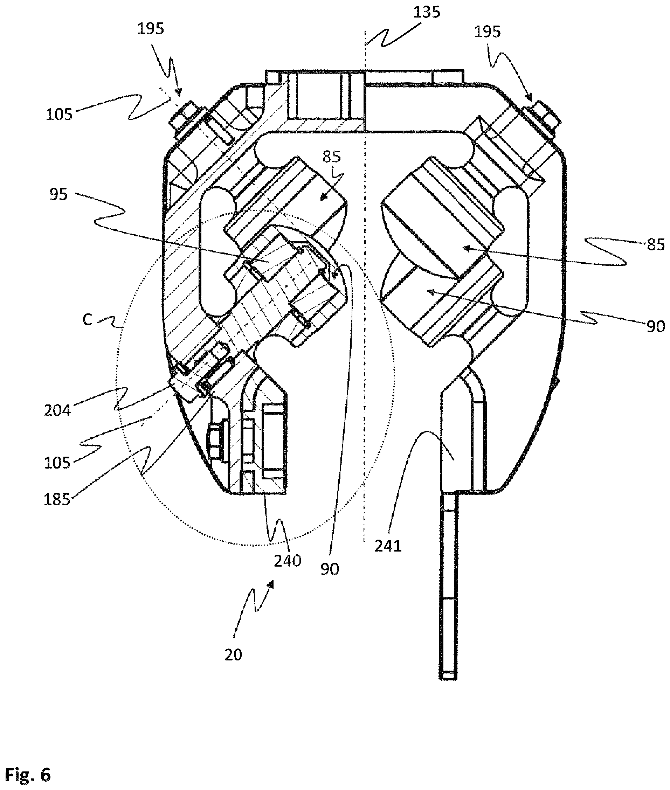

Figur 6 zeigt den in Figur 4 dargestellten Träger 130 in einen Teilquerschnitt entlang der Symmetrieebene 135, die die Schnittebene bildet. Wie erkennbar, ist die Hälfte des Trägers 130 links der Symmetrieebene 135 geschnitten und die Hälfte rechts der Symmetrieebene 135 nicht geschnitten dargestellt. Entgegen der Darstellung in Figur 4 weist der Träger 130 in dieser Darstellung noch weitere Bauelemente auf, auf die im Folgenden näher eingegangen wird.

Am zweiten Trägerabschnitt 145 (zu Fig. 4 näher beschrieben) ist die erste Rolleinheit 85 mittels eines Befestigungsmittels 195 angeordnet. In der Ausführungsform sind in Längsrichtung hintereinander mehrere erste Rolleinheiten 85 angeordnet. Die Anordnung der ersten Rolleinheit 85 ist spiegelsymmetrisch zu der Symmetrieebene 135, so dass in Querrichtung gegenüberliegend zu jeder ersten Rolleinheit 85 jeweils eine weitere erste Rolleinheit 85 angeordnet und mittels eines weiteren Befestigungsmittels 195 am weiteren zweiten Trägerabschnitt 145 befestigt ist.

Am vierten Trägerabschnitt 155 (zu Fig. 4 näher beschrieben) ist die zweite Rolleinheit 90 mittels eines weiteren Befestigungsmittels 195 befestigt. Die zweite Rolleinheit 90 ist in Längsrichtung zwischen jeweils zwei ersten Rolleinheiten 85 angeordnet.

In Querrichtung gegenüberliegend ist symmetrisch zur Symmetrieebene 135 eine weitere zweite Rolleinheit 90 am weiteren vierten Trägerabschnitt 155 mittels eines weiteren Befestigungsmittels 195 befestigt.

Das Befestigungsmittel 195 ist als Stegbolzen ausgebildet und weist beispielsweise den ersten Werkstoff auf. Das Befestigungsmittel 195 ist mittels eines Verbindungselements 204, beispielsweise einer Schraube, das die Buchse 185 durchgreift, mit dem Trägerabschnitt 145, 155 verbunden.

Im Bereich eines freien Endes des Befestigungsmittels 195 ist die Lageranordnung 95 an jedem Befestigungsmittel 195 angeordnet, um die Rolleinheit 85, 90 drehbar um die Drehachse 105 zu lagern und mit dem Befestigungselement 195 zu verbinden.

In der Ausführungsform ist die Drehachse 105, um die die Rolleinheit 85, 90 drehbar ist, senkrecht zu dem jeweils zugeordneten Trägerabschnitt 145, 155 angeordnet. Dadurch ist die Drehachse 105, um die die erste Rolleinheit 85 rotiert, senkrecht zu der Drehachse 105, um die die zweite Rolleinheit 90 drehbar angeordnet ist, ausgerichtet.

Am vierten Trägerabschnitt 155 ist jeweils gegenüberliegend ein Halteelement 240, 241 der Trägereinheit 100 angeordnet. Das Halteelement 240, 241 und der Träger weisen den ersten Werkstoff auf. Vorteilhafterweise ist der erste Werkstoff des Trägers 130 und des Halteelements 240, 241 identisch.

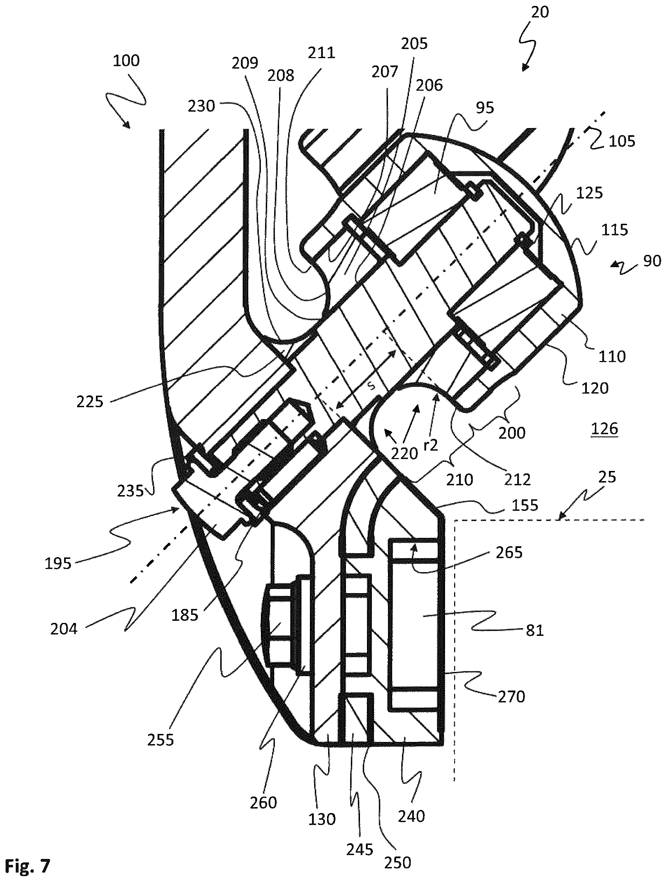

Figur 7 zeigt den Ausschnitt C des in Figur 6 gezeigten Teilquerschnitts durch die Fördereinrichtung 20.

Das Verschlusselement 115 begrenzt den Lagerraum 125, in dem die Lageranordnung 95 angeordnet ist, auf einer zum vierten Trägerabschnitt 155 abgewandten Seite. Das Verschlusselement 115 ist in der Ausführungsform kuppelförmig ausgebildet und erstreckt sich im Wesentlichen vollständig stirnseitig über den Rollkörper 110. Dabei ist von besonderem Vorteil, wenn das Verschlusselement 115 und der Rollkörper 110 einstückig und materialeinheitlich ausgebildet sind. Von besonderem Vorteil ist insbesondere, wenn beispielsweise der Rollkörper 110 und das Verschlusselement 115 einen Kunststoff, insbesondere Polyketon als zweiten Werkstoff, aufweisen. Dadurch können besonders einfach der Rollkörper 110 und das Verschlusselement 115 in einem Spritzgussverfahren hergestellt werden.

Außenseitig sind der Rollkörper 110 und das Verschlusselement 115 frei von Hinterschneidungen und/oder Ecken und/oder Stö-βen und sind im Wesentlichen glatt ausgebildet. Sie weisen hierbei einen Mittelrauwert auf, wobei der Mittelrauwert in einem Bereich von 0,2 µm bis 0,8 µm, insbesondere in einem Bereich von 0,4 µm bis 0,8 µm, liegt. Dadurch kann eine leichte Reinigung der zweiten Rolleinheit 90 außenseitig sichergestellt werden.

Angrenzend an das Verschlusselement 115 erstreckt sich in axialer Richtung die Lauffläche 120. Auf einer zum Verschlusselement 115 abgewandten Seite kann zusätzlich der Rollkörper einen Einpressabschnitt 200 aufweisen. Der Einpressabschnitt 200 kann dabei als Einschnürung außenseitig an dem Rollkörper 110 ausgebildet sein.

Auf einer zum Verschlusselement 115 abgewandten Seite weist die zweite Rolleinheit 90 ein erstes Dichtelement 205 auf. Das erste Dichtelement 205 dichtet den Lagerraum 125 gegenüber der Umgebung 126 ab. Vorzugsweise weist das erste Dichtelement 205 wenigstens einen der folgenden dritten Werkstoffe auf: Kunststoff, Polytetrafluorethylen.

Zwischen der zweiten Rolleinheit 90 und dem vierten Trägerabschnitt 155 ist ein Spalt 210 angeordnet. Der Spalt 210 weist eine Spaltkontur auf, die durch die angrenzend an den Spalt 210 vorgegebenen Komponenten definiert ausgebildet wird. Dabei weist die Spaltkontur radial innenseitig bezogen auf die Drehachse 105 einen Verrundungsabschnitt 220 auf. Der Verrundungsabschnitt 220 ist dabei radial innenseitig am Spalt 210 angeordnet. Der Verrundungsabschnitt weit einen zweiten Radius r2 auf. Radial außenseitig ist der Spalt 210 nutartig ausgebildet und offen. Durch den Verrundungsabschnitt 220 verjüngt sich der Spalt 210 von radial außen nach radial innen hin.

Der Spalt 210 weist eine (maximale) Spaltbreite s in axialer Richtung bezogen auf die Drehachse 105 der zweiten Rolleinheit 90 auf. Die Spaltbreite s ist derart gewählt, dass der Spalt 210 besonders leicht beispielsweise mit einem Wasserstrahl, insbesondere in einer Spülmaschine, gereinigt werden kann. Ferner verhindert die breite Ausgestaltung des Spalts 210 die Anlagerungen von Verschmutzungen, beispielsweise wie Fetten und Ölen oder Schmutzpartikeln oder Lebensmittelpartikel, im Spalt 210. Beispielsweise beträgt die Spaltbreite 8 bis 16 mm, insbesondere 12 mm.

Das erste Dichtelement 205 liegt radial innenseitig mit einer ersten Dichtfläche 206 an dem Befestigungsmittel 195 umfangsseitig an. Radial außenseitig weist das erste Dichtelement 205 eine zweite Dichtfläche 207 auf. Die zweite Dichtfläche 207 ist parallel zur ersten Dichtfläche 206 ausgerichtet und verläuft in axialer Richtung bezogen auf die Drehachse 105.

Die zweite Dichtfläche 207 liegt radial innenseitig am Einpressabschnitt 200 an. Mit dem Einpressabschnitt 200 wird eine axiale Position des ersten Dichtelements 205 am Rollkörper 110 fixiert.

Das erste Dichtelement 205 ist an der ersten Dichtfläche 206 in axialer Richtung bezogen auf die Drehachse 105 breiter ausgebildet als an der zweiten Dichtfläche 207. Ferner weist das erste Dichtelement 205 eine erste Dichtaußenfläche 208 auf, die auf einer zum Lagerraum 125 abgewandten Seite und auf einer dem Spalt 210 zugewandten Seite angeordnet ist. Die erste Dichtaußenfläche 208 ist bezogen auf den Lagerraum 125 konkav verrundet und begrenzt an einer Seite den Verrundungsabschnitt 220. Die erste Dichtaußenfläche 208 ist derart ausgebildet, dass ein erster Übergang 209 zwischen dem Befestigungsmittel 195 und dem ersten Dichtelement 205 im Wesentlichen glatt ist. Am ersten Übergang 209 grenzen die erste Dichtaußenfläche 208 und die erste Dichtfläche 206 im Wesentlichen aneinander an. Ferner ist am ersten Übergang 209 die erste Dichtaußenfläche 208 tangential zu einer Umfangsfläche des Befestigungsmittels 195 ausgerichtet.

Ein zweiter Übergang 211 zwischen der ersten Dichtaußenfläche 208 des ersten Dichtelements 205 und einer Stirnfläche 212 des Rollkörpers 110 ist ebenso im Wesentlichen glatt ausgebildet. Dies erfolgt dadurch, dass am zweiten Übergang 211, an dem die erste Dichtaußenfläche 208 an die zweite Dichtfläche 207 angrenzt, die erste Dichtaußenfläche 208 im Wesentlichen tangential zu der Stirnfläche 212 des Rollkörpers 110 verläuft.

Auf einer zur zweiten Rolleinheit 90 abgewandten Seite des Spalts 210 wird der Spalt 210 durch ein zweites Dichtelement 225 der Trägereinheit 100 und den vierten Trägerabschnitt 155 begrenzt. Das zweite Dichtelement 225 ist zwischen dem Befestigungsmittel 195 und dem Träger 130 angeordnet. Das zweite Dichtelement 225 weist eine zweite Dichtaußenfläche 230 auf.

Die zweite Dichtaußenfläche 230 ist ebenso wie die erste Dichtaußenfläche 208 verrundet ausgebildet und begrenzt den Verrundungsabschnitt 210. Die Verrundung der zweiten Dichtaußenfläche 230 ist bezogen auf den vierten Trägerabschnitt 155 konvex ausgebildet und so ausgestaltet, dass an Übergängen zwischen dem zweiten Dichtelement 225 und dem Befestigungsmittel 195 und dem vierten Trägerabschnitt 155 diese im Wesentlichen stufenlos sind. In axialer Richtung bezogen auf die Drehachse 105 ist die zweite Dichtaußenfläche 230 gegenüberliegend zu der ersten Dichtaußenfläche 208 angeordnet.

Das zweite Dichtelement 225 dient dazu, ein Eindringen von Verschmutzungen oder Flüssigkeiten aus der Umgebung 126 zwischen dem Befestigungsmittel 195 und dem Träger 130 zu vermeiden. Dadurch wird eine ungewollte Verschmutzung und/oder eine Korrosion innerhalb der Trägereinheit 100 vermieden.

Die Trägereinheit 100 weist ein drittes Dichtelement 235 auf. Das dritte Dichtelement 235 ist als Dichtscheibe ausgebildet und zwischen dem Träger 130 und dem Verbindungselement 204 angeordnet. Dadurch wird ein Eindringen von Verschmutzungen außenseitig in den Träger 130 im Bereich der Buchse 185 vermieden.

Das Halteelement 240 ist mittels eines weiteren Befestigungsmittels 255 am vierten Trägerabschnitt 155 befestigt und angrenzend an die in Figur 4 dargestellte Aufnahmeöffnung 170 angeordnet. Das Halteelement 240 begrenzt zusammen mit dem vierten Trägerabschnitt 155 eine Dichtnut 250, die umlaufend um das Halteelement 240 zwischen dem vierten Trägerabschnitt 155 und dem Halteelement 240 angeordnet ist. In der Dichtnut 250 ist ein viertes Dichtelement 245 der Trägereinheit 100 angeordnet.

Ebenso ist an dem weiteren Befestigungsmittel 255 ein fünftes Dichtelement 260 vorgesehen. Das vierte und fünfte Dichtelement 245, 260 verhindern das Eindringen von Verschmutzungen, insbesondere Flüssigkeiten, zwischen das weitere Befestigungsmittel 255 sowie das Halteelement 240 und den Träger 130. Vorzugsweise weist das erste bis fünfte Dichtelement 225, 235, 245, 260 wenigstens einen der folgenden dritten Werkstoffe auf: Kunststoff, Fluorkautschuk, Polytetrafluorethylen.

Das Halteelement 240 weist eine Aufnahme 265 auf. Die Aufnahme 265 ist auf einer zum Träger 130 abgewandten Seite und auf einer zur der in Figur 4 dargestellten Aufnahmeöffnung 170 zugewandten Seite angeordnet.

Dabei wird die Aufnahme 265 auf einer zur Aufnahmeöffnung 170 und auf einer zum Antriebsmodul 25 zugewandten Seite durch ein weiteres Verschlusselement 270 verschlossen. Erfindungsgemäß ist das weitere Verschlusselement 270 dünnwandig, folienartig ausgebildet. Das weitere Verschlusselement 270 weist eine Dicke d (nicht eingezeichnet) auf, wobei die Dicke d in einem Bereich von 0,1 mm bis 0,8 mm liegt. In der Aufnahme 265 ist der zweite Magnetanordnungsabschnitt 81 angeordnet.

Ein Werkstoff des weiteren Verschlusselements 270 ist derart gewählt, dass das Wanderfeld und der zweite Magnetanordnungsabschnitt 81 interagieren können, so dass der Antrieb der Fördereinrichtung 20 zuverlässig sichergestellt wird. Dies kann beispielsweise dadurch erfolgen, dass das weitere Verschlusselement 270 beispielsweise den ersten Werkstoff aufweist. Der erste Werkstoff ist dabei unmagnetisch. Dabei wird durch die dünnwandige Ausgestaltung sichergestellt, dass die Wirkverbindung zwischen dem Wanderfeld und der Magnetanordnung 80 nicht unterbrochen wird bzw. nicht unverhältnismäßig gestört wird. Ferner wird eine elektrochemische Korrosion mit dem Träger 130 vermieden.

Durch eine stoffschlüssige Verbindung des weiteren Verschlusselements 270 mit dem Halteelement 240 wird eine sichere Befestigung des weiteren Verschlusselements 270 an dem Halteelement 240 sichergestellt.

Dadurch ist die Magnetanordnung 80 gegenüber der Umgebung 126 derart geschützt, dass ein Eindringen von Feuchtigkeit im zweiten Magnetanordnungsabschnitt 81 vermieden wird und somit beispielsweise eine Korrosion des zweiten Magnetanordnungsabschnitts 81, insbesondere eine Rostbildung an dem zweiten Magnetanordnungsabschnitt 81, vermieden wird.

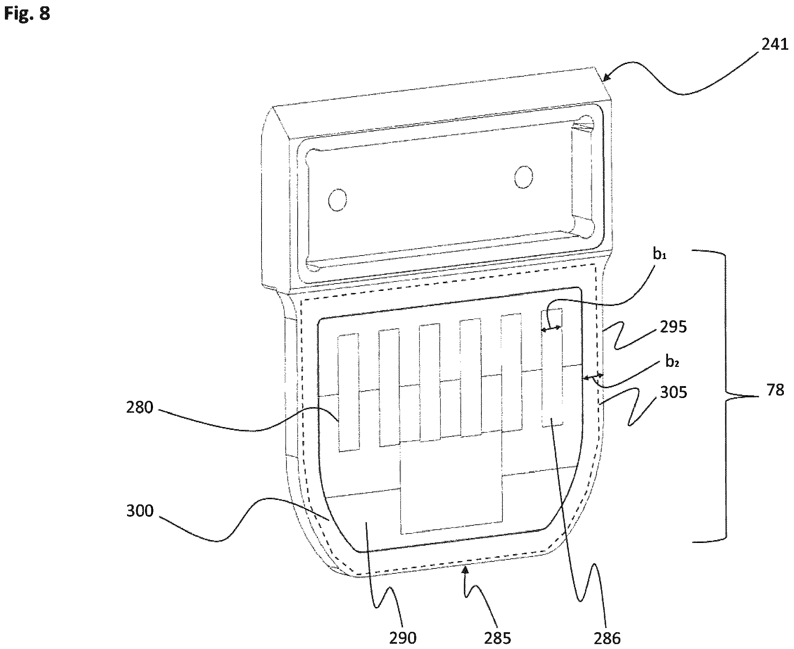

Figur 8 zeigt eine perspektivische Darstellung des in Figur 6 dargestellten weiteren Halteelements 241.

Die Fahne 78 ist an dem weiteren Halteelement 241 befestigt und insbesondere einstückig und materialeinheitlich mit diesem ausgebildet.

Die Fahne 78 weist wenigstens einen Signalbeeinflusser 280 und ein Gehäuse 285 auf. Der Signalbeeinflusser 280 kann beispielsweise eine Fläche 286 auf einer Leiterplatte umfassen. Die Fläche 286 weist eine Breite b₁ in Längsrichtung der Laufschiene auf und ist aus einem metallischen Werkstoff.

In der Ausführungsform weist das Gehäuse 285 einen Rahmen 295 auf. Der Rahmen 295 ist umlaufend ausgebildet und oberseitig mit dem weiteren Halteelement 241 verbunden. Der Rahmen 295 begrenzt einen Gehäuseinnenraum 290. Dabei ist in den Rahmen 295 passgenau der Signalbeeinflusser 280 eingesetzt. Der Rahmen 295 weist eine Rahmenbreite b₂ in Längsrichtung der Laufschiene auf Höhe der bedampften Fläche 286 auf. Die Rahmenbreite b₂ ist vorteilhafterweise identisch zu der Breite b₁ der bedampften Fläche 286. Der Rahmen 295 weist seitlich jeweils eine Auflagefläche 300 auf. Auf der Auflagefläche 300 liegt ein Abdeckelement 305 auf (in Figur 7 strichliert symbolisch dargestellt), wobei das Abdeckelement 305 den Gehäuseinnenraum 290 fluiddicht verschließt.

Vorzugsweise weist das Abdeckelement 305 wenigstens einen der folgenden vierten Werkstoffe auf: Kunststoff, Polyester, Nichtmetall, unmagnetisches Material. Von besonderem Vorteil ist hierbei, wenn das Abdeckelement 305 dünnwandig, insbesondere folienartig ausgebildet ist. Ferner ist von Vorteil, wenn das Abdeckelement 305 eine Dicke d_{A} in einem Bereich von 0,05 mm bis 0,2 mm aufweist. Das Abdeckelement 305 ist stoffschlüssig mit dem Rahmen 295 an der Auflagefläche 300 verbunden. Vorzugsweise weist das Abdeckelement 305 eine Klebschicht auf, mit der das Abdeckelement 305 mit dem Rahmen 295 an der Auflagefläche 300 verklebt ist. Die Klebschicht kann sich über den Gehäuseinnenraum 290 erstrecken, so dass der Signalbeeinflusser 280 zusätzlich in Querrichtung zu der Laufschiene durch das Ankleben an dem Abdeckelement 305 fixiert wird.

In der Ausführungsform ist das Abdeckelement 305 beidseitig des Rahmens 295 angeordnet und verschließt in beide Richtungen den Gehäuseinnenraum 290. Selbstverständlich kann das Gehäuse 285 auch dahingehend ausgebildet sein, dass das Gehäuse - ähnlich wie das Halteelement 240 - auf einer zum Antriebsmodul abgewandten Seite durch eine Gehäusewandung verschlossen ist.

Durch das Abdeckelement 305 und die dünnwandige Ausgestaltung wird sichergestellt, dass ein Signal der Ermittlungseinrichtung durch den Rahmen 295 auf Höhe der Fläche 286 und durch die Fläche 286 derart beeinflusst wird, dass auf Grundlage des beeinflussten Signals die Ermittlungseinrichtung zuverlässig eine Position der Fahne 78 relativ zum Antriebsmodul 25 ermittelt werden kann.

Die oben beschriebene Ausgestaltung der Fördereinrichtung 20, insbesondere des Lineartransportsystems 10, stellt sicher, dass an der Fördereinrichtung 20 schmale Spalte oder Toträume oder Hinterschneidungen vermieden werden. Durch die hermetische Abdichtung des Trägers 130 und der Lageranordnung 95 wird eine innere Verschmutzung der Fördereinrichtung 20, die besonders schwer zu beheben ist, vermieden.

Durch den breiten Spalt 210 zwischen der Trägereinheit 100 und der Rolleinheit 85, 90 kann dieser besonders leicht gereinigt werden. Durch die verdeckte Anordnung der Magnetanordnung 80 wird eine Korrosion der Magnetanordnung 80 vermieden.

Zusätzlich ist von Vorteil, wenn für den jeweiligen Einsatz der Fördereinrichtung 20 die verwendeten Werkstoffe entsprechend widerstandsfähig gegenüber den einzusetzenden Reinigungsmitteln und/oder den auftretenden Verschmutzungen sind. Es wird darauf hingewiesen, dass die oben beschriebene Ausgestaltung der Fördereinrichtung 20 beispielhaft ist und dass der Schutzbereich der Erfindung durch die Ansprüche bestimmt wird. Insbesondere ist denkbar, dass die Rolleinheit 85, 90 andersartig ausgebildet ist. Insbesondere ist eine andere Anzahl oder eine andere Ausrichtung der Rolleinheiten 95, 90 zueinander denkbar. Korrespondierend zu der anderen Ausrichtung der Rolleinheit 85, 90 kann entsprechend auch die Laufschiene 35 ausgebildet sein.

## Patentansprüche

1. Fördereinrichtung (20) für ein Lineartransportsystem (10),
- wobei die Fördereinrichtung (20) wenigstens eine Rolleinheit (85, 90), eine Magnetanordnung (80) und eine Trägereinheit (100) umfasst,
- wobei die Trägereinheit (100) U-förmig ausgebildet ist und außenseitig eine Außenseite (180) sowie innenseitig eine Innenseite (171) aufweist,
- wobei die Innenseite (171) einen Aufnahmeraum (165) zur Aufnahme einer Laufschiene (35) des Lineartransportsystems (10) begrenzt,
- wobei die Rolleinheit (85, 90) beabstandet zu der Innenseite (171) in dem Aufnahmeraum (165) angeordnet ist,
- wobei die Innenseite (171) und/oder die Außenseite (180) glatt ausgebildet ist,
- wobei die Trägereinheit (100) eine Aufnahme (265) aufweist,
- wobei in der Aufnahme (265) ein Magnetanordnungsabschnitt (81) der Magnetanordnung (80) angeordnet ist,
- **dadurch gekennzeichnet, dass**
- die Aufnahme (265) auf einer zu einem Antriebsmodul (25, 30) des Lineartransportsystems (10) zugewandten Seite mittels eines an der Trägereinheit (100) stoffschlüssig verbundenen weiteren Verschlusselements (270) derart verschlossen ist, dass ein Eindringen von Feuchtigkeit in den Magnetanordnungsabschnitt (81) der Magnetanordnung (80) vermieden wird,
- wobei das weitere Verschlusselement (270) dünnwandig, folienartig ausgebildet ist und eine Dicke aufweist, die in einem Bereich von 0,1 mm bis 0,8 mm liegt,
- wobei das weitere Verschlusselement (270) die Magnetanordnung (80) abdeckt,
- wobei ein Werkstoff des weiteren Verschlusselements (270) derart gewählt ist, dass ein magnetisches Wanderfeld und der Magnetanordnungsabschnitt (81) zum Antrieb der Fördereinrichtung (20) interagieren können.

2. Fördereinrichtung (20) nach Anspruch 1,
- wobei die Trägereinheit (100) einen Träger (130) mit einem ersten Trägerabschnitt (140) und wenigstens einem zweiten Trägerabschnitt (145) aufweist,
- wobei der zweite Trägerabschnitt (145) geneigt zu dem ersten Trägerabschnitt (140) angeordnet ist und mit dem ersten Trägerabschnitt (140) verbunden ist,
- wobei die Innenseite (171) an dem ersten Trägerabschnitt (140) und an dem zweiten Trägerabschnitt (145) zumindest abschnittsweise plan ausgebildet ist,
- wobei die Innenseite (171) zwischen dem ersten Trägerabschnitt (140) und dem zweiten Trägerabschnitt (145) derart gekrümmt ausgebildet ist, dass die Innenseite (171) stufenlos zwischen dem ersten Trägerabschnitt (140), und dem zweiten Trägerabschnitt (145) übergeht.

3. Fördereinrichtung nach Anspruch 2,
- wobei der Träger (130) U-förmig und spiegelsymmetrisch ausgebildet ist und wenigstens einen dritten Trägerabschnitt (150) und einen vierten Trägerabschnitt (155) aufweist,
- wobei der dritte Trägerabschnitt auf einer zum ersten Trägerabschnitt (140) abgewandten Seite des zweiten Trägerabschnitts (145) angeordnet und mit dem zweiten Trägerabschnitt (145) verbunden ist,
- wobei der dritte Trägerabschnitt (150) geneigt zu dem ersten Trägerabschnitt (140) und zweiten Trägerabschnitt (145) angeordnet ist,
- wobei der vierte Trägerabschnitt (155) auf einer zum zweiten Trägerabschnitt (145) abgewandten Seite des dritten Trägerabschnitts (150) angeordnet und mit dem dritten Trägerabschnitt (150) verbunden ist,
- wobei der vierte Trägerabschnitt (155) geneigt zu dem dritten Trägerabschnitt (150) angeordnet ist,
- wobei der zweite Trägerabschnitt (145) und der vierte Trägerabschnitt (155) auf einer zum Aufnahmeraum (165) zugewandten Seite des dritten Trägerabschnitts (150) angeordnet sind,
- wobei der vierte Trägerabschnitt (155) auf einer zum ersten Trägerabschnitt (140) abgewandten Seite eine Aufnahmeöffnung (170) des Aufnahmeraums (165) begrenzt,
- wobei die Innenseite (171) sich über die Trägerabschnitte (140, 145, 150, 155) hin innenseitig erstreckt und stufenlos ausgebildet ist.

4. Fördereinrichtung (20) nach einem der vorhergehenden Ansprüche,
- wobei die Fördereinrichtung (20) eine Lageranordnung (95) umfasst,
- wobei die Lageranordnung (95) die Rolleinheit (85, 90) drehbar um eine Drehachse (105) an der Trägereinheit (100) lagert,
- wobei die Rolleinheit (85, 90) einen Rollkörper (110), ein Verschlusselement (115) und einen Lagerraum (125) umfasst,
- wobei der Rollkörper (110) eine Lauffläche (120) umfangsseitig aufweist und innenseitig den Lagerraum (125) begrenzt,
- wobei in dem Lagerraum (125) die Lageranordnung (95) angeordnet ist,
- wobei die Lauffläche (120) ausgebildet ist, an einer Schienenlauffläche (36, 37) der Laufschiene (35) des Lineartransportsystems (10) anzuliegen und die Fördereinrichtung (20) entlang der Laufschiene (35) zu führen,
- wobei das Verschlusselement (115) stirnseitig mit dem Rollkörper (110) verbunden ist und stirnseitig den Lagerraum (125) gegenüber einer Umgebung (126) abdichtet,
- wobei vorzugsweise das Verschlusselement (115) kuppelförmig ausgebildet ist und den Rollkörper (110) vollständig stirnseitig bedeckt,
- wobei vorzugsweise das Verschlusselement (115) und der Rollkörper (110) einstückig und materialeinheitlich ausgebildet sind.

5. Fördereinrichtung (20) nach Anspruch 4,
- wobei der Rollkörper (110) und das Verschlusselement (115) außenseitig frei von Hinterschneidungen und/oder Ecken und/oder Stößen sind und/oder
- im Wesentlichen glatt ausgebildet sind.

6. Fördereinrichtung (20) nach Anspruch 4 oder 5,
- wobei die Rolleinheit (85, 90) ein erstes Dichtelement (205) aufweist,
- wobei das erste Dichtelement (205) den Lagerraum (125) auf einer zum Verschlusselement (115) abgewandten Seite des Rollkörpers (110) verschließt.

7. Fördereinrichtung nach Anspruch 6,
- wobei das erste Dichtelement (205) radial innenseitig eine erste Dichtfläche (206), radial außenseitig eine zweite Dichtfläche (207) und eine Dichtaußenfläche (208) aufweist,
- wobei die erste Dichtfläche (206) an einem Befestigungsmittel (195), das die Lageranordnung (95) an der Trägereinheit (100) befestigt, anliegt,
- wobei die zweite Dichtfläche (207) am Rollkörper (110) innenseitig anliegt,
- wobei die Dichtaußenfläche (208) auf einer zum Lagerraum (125) abgewandten Seite des ersten Dichtelements (205) angeordnet ist,
- wobei die Dichtaußenfläche (208) derart ausgestaltet ist, dass ein erster Übergang (209) zwischen dem Befestigungsmittel (195) und der Dichtaußenfläche (208) sowie ein zweiter Übergang (211) zwischen einer dem ersten Dichtelement (205) zugewandten Stirnfläche (212) des Rollkörpers (110) und der Dichtaußenfläche (208) im Wesentlichen stufenlos ist,
- wobei die Dichtaußenfläche (208) im Wesentlichen konkav bezogen auf den Lagerraum (125) ausgebildet ist, wobei vorteilhafterweise das erste Dichtelement (205) an der ersten Dichtfläche (206) in axialer Richtung bezogen auf die Drehachse (105) breiter ausgebildet ist als an der zweiten Dichtfläche (207) .

8. Fördereinrichtung (20) nach Anspruch 7,
- wobei die Trägereinheit (100) ein zweites Dichtelement (225) umfasst,
- wobei zwischen dem Träger (130) und dem Befestigungsmittel (195) das zweite Dichtelement (225) angeordnet ist,
- wobei das zweite Dichtelement (225)den Träger (130) und das Befestigungsmittel (195) gegenüber der Umgebung abdichtet.

9. Fördereinrichtung (20) nach einem der vorhergehenden Ansprüche,
- wobei zwischen der Rolleinheit (85, 90) und der Trägereinheit (100) ein Spalt (210) angeordnet ist,
- wobei der Spalt (210) eine Spaltbreite (s) in axialer Richtung bezogen auf die Drehachse (105) aufweist,
- wobei die Spaltbreite (s) derart gewählt ist, das eine mechanische Reinigungseinrichtung zur mechanischen Reinigung des Spalts (210) in den Spalt (210) einführbar ist.

10. Fördereinrichtung (20) nach Anspruch 9,
- wobei der Spalt (210) einen radial innenseitig angeordneten Verrundungsabschnitt (220) umfasst,
- wobei der Verrundungsabschnitt (220) im Wesentlichen durch das erste Dichtelement (205) und das zweite Dichtelement (225) begrenzt wird,
- wobei der Verrundungsabschnitt (220) einen Radius (r2) aufweist,
- wobei der Radius (r2)zumindest 4 mm, vorzugsweise wenigstens 6 mm beträgt.

11. Fördereinrichtung (20) nach einem der vorhergehenden Ansprüche,
- wobei die Trägereinheit (100) ein Halteelement (240, 241) und ein weiteres Dichtelement (245) aufweist,
- wobei in dem Halteelement (240, 241) die Aufnahme (265) angeordnet ist,
- wobei zwischen dem Halteelement (240, 241) und dem Träger (130) das weitere Dichtelement (245) angeordnet ist,
- und/oder
- wobei der Träger (130) und/oder das Befestigungsmittel (195) und/oder das weitere Verschlusselement (270) wenigstens einen der folgenden ersten Werkstoffe aufweist:
- Edelstahl,
- V4A-Stahl,
- Kunststoff,
- Polyethylen,
- Polytetrafluorethylen;
- wobei die Rolleinheit (85, 90) wenigstens einen der folgenden zweiten Werkstoffe aufweist:
- Kunststoff,
- Polyketon;
- wobei das erste und/oder zweite Dichtelement (205, 255) wenigstens einen der folgenden dritten Werkstoffe aufweist:
- Kunststoff,
- Polytetrafluorethylen,
- Fluorkautschuk.

12. Fördereinrichtung (20) nach einem der vorhergehenden Ansprüche,
- aufweisend eine Fahne (78),
- wobei die Fahne (78) ein Gehäuse (285) und einen Signalbeeinflusser (280) umfasst,
- wobei das Gehäuse (285) einen Gehäuseinnenraum (290) aufweist, in dem der Signalbeeinflusser (280) angeordnet ist,
- wobei das Gehäuse (285) einen Rahmen (295) und wenigstens ein Abdeckelement (305) umfasst,
- wobei der Rahmen (295) abschnittsweise den Gehäuseinnenraum (290) begrenzt,
- wobei das Abdeckelement (305) seitlich an dem Rahmen (295) angeordnet ist und den Gehäuseinnenraum (290) verschließt.

13. Fördereinrichtung (20) nach Anspruch 12,
- wobei das Abdeckelement (305) dünnwandig, vorzugsweise folienartig, ausgebildet ist,
- wobei das Abdeckelement (305) vorzugsweise eine Dicke (d_{A}) in einem Bereich von 0,1 mm bis 0,8 mm aufweist,
- wobei das Abdeckelement (305) vorzugweise stoffschlüssig mit dem Rahmen (295) verbunden, vorzugsweise verklebt, ist und/oder
- wobei der Rahmen (295) und das Halteelement (241) einstückig und materialeinheitlich ausgebildet sind
- und/oder
- wobei das Abdeckelement (305) wenigstens einen der folgenden vierten Werkstoffe aufweist:
- Kunststoff,
- Polyester,
- Nichtmetall,
- unmagnetisches Material.

14. Lineartransportsystem (10)
- mit wenigstens einem Antriebsmodul (25, 30), einer Laufschiene (35) und einer Fördereinrichtung (20),
- wobei die Fördereinrichtung (20) nach einem der Ansprüche 4 bis 13 ausgebildet ist,
- wobei die Laufschiene (35) wenigstens eine Schienenlauffläche (36, 37) aufweist,
- wobei die Lauffläche (120) auf der Schienenlauffläche (36, 37) aufliegt und die Laufschiene (35) die Fördereinrichtung (20) in einer Bewegung führt,
- wobei zumindest abschnittsweise die Trägereinheit (100) die Laufschiene (35) und das Antriebsmodul (25, 30) umgreift,
- wobei das Antriebsmodul (25, 30) ein Steuergerät (40) und einen Stator (65) mit einer Vielzahl von Wicklungen aufweist,
- wobei das Steuergerät (40) mit den Wicklungen verbunden und ausgebildet ist, die Wicklungen derart anzusteuern, dass der Stator (65) schaltbar das magnetisches Wanderfeld bereitstellt,
- wobei das Wanderfeld in Wirkverbindung mit der Magnetanordnung (80) steht und das Wanderfeld die Fördereinrichtung (20) entlang der Laufschiene (35) bewegt.

## Claims

1. Conveying device (20) for a linear transport system (10),
- wherein the conveying device (20) comprises at least one rolling unit (85, 90), a magnet arrangement (80) and a carrier unit (100),
- wherein the carrier unit (100) is of U-shaped configuration and on the outside has an outer side (180) and on the inside has an inner side (171),
- wherein the inner side (171) bounds a receiving space (165) for receiving a running rail (35) of the linear transport system (10),
- wherein the rolling unit (85, 90) is arranged in the receiving space (165) in a manner spaced apart from the inner side (171),
- wherein the inner side (171) and/or the outer side (180) are/is of substantially smooth configuration,
- wherein the carrier unit (100) has a receptacle (265),
- wherein a magnet arrangement portion (81) of the magnet arrangement (80) is arranged in the receptacle (265),
- **characterized in that**
- the receptacle (265) is closed on a side facing a drive module (25, 30) of the linear transport system (10) by means of a further closure element (270), which is connected in an integrally bonded manner to the carrier unit (100), in such a manner that an ingress of moisture into the magnet arrangement portion (81) of the magnet arrangement (80) is avoided,
- wherein the further closure element (270) is of thin-walled configuration, preferably in the manner of a film, and has a thickness lying within a range of 0.1 mm to 0.8 mm,
- wherein the further closure element (270) covers the magnet arrangement (80),
- wherein a material of the further closure element (270) is selected in such a manner that a magnetic moving field and the magnet arrangement portion (81) can interact to drive the conveying device (20).

2. Conveying device (20) according to Claim 1,
- wherein the carrier unit (100) has a carrier (130) with a first carrier portion (140) and at least one second carrier portion (145),
- wherein the second carrier portion (145) is arranged inclined with respect to the first carrier portion (140) and is connected to the first carrier portion (140),
- wherein the inner side (171) on the first carrier portion (140) and on the second carrier portion (145) is of flat configuration at least in sections,
- wherein the inner side (171) between the first carrier portion (140) and the second carrier portion (145) is of curved configuration in such a manner that the inner side (171) merges steplessly between the first carrier portion (140) and the second carrier portion (145).

3. Conveying device according to Claim 2,
- wherein the carrier (130) is of U-shaped and mirror-symmetrical configuration and has at least one third carrier portion (150) and a fourth carrier portion (155),
- wherein the third carrier portion is arranged on a side of the second carrier portion (145) facing away from the first carrier portion (140) and is connected to the second carrier portion (145),
- wherein the third carrier portion (150) is arranged inclined with respect to the first carrier portion (140) and second carrier portion (145),
- wherein the fourth carrier portion (155) is arranged on a side of the third carrier portion (150) facing away from the second carrier portion (145) and is connected to the third carrier portion (150),
- wherein the fourth carrier portion (155) is arranged inclined with respect to the third carrier portion (150),
- wherein the second carrier portion (145) and the fourth carrier portion (155) are arranged on a side of the third carrier portion (150) facing the receiving space (165),
- wherein the fourth carrier portion (155) bounds a receiving opening (170) of the receiving space (165) on a side facing away from the first carrier portion (140),
- wherein the inner side (171) extends on the inside beyond the carrier portions (140, 145, 150, 155) and is of stepless configuration.

4. Conveying device (20) according to one of the preceding claims,
- wherein the conveying device (20) comprises a bearing arrangement (95),
- wherein the bearing arrangement (95) supports the rolling unit (85, 90) on the carrier unit (100) so as to be rotatable about an axis of rotation (105),
- wherein the rolling unit (85, 90) comprises a rolling body (110), a closure element (115) and a bearing space (125),
- wherein the rolling body (110) has a running surface (120) circumferentially and bounds the bearing space (125) on the inside,
- wherein the bearing arrangement (95) is arranged in the bearing space (125),
- wherein the running surface (120) is configured to lie against a rail running surface (36, 37) of the running rail (35) of the linear transport system (10) and to guide the conveying device (20) along the running rail (35),
- wherein the closure element (115) is connected on the end side to the rolling body (110) and seals the bearing space (125) on the end side in relation to an environment (126),
- wherein preferably the closure element (115) is of dome-shaped configuration and completely covers the rolling body (110) on the end side,
- wherein preferably the closure element (115) and the rolling body (110) are formed integrally and from the same material.

5. Conveying device (20) according to Claim 4,
- wherein the rolling body (110) and the closure element (115) are on the outside free from undercuts and/or corners and/or bumps and/or
- are of substantially smooth configuration.

6. Conveying device (20) according to Claim 4 or 5,
- wherein the rolling unit (85, 90) has a first sealing element (205),
- wherein the first sealing element (205) closes the bearing space (125) on a side of the rolling body (110) facing away from the closure element (115).

7. Conveying device according to Claim 6,
- wherein the first sealing element (205) has a first sealing surface (206) radially on the inside, and a second sealing surface (207) and a sealing outer surface (208) radially on the outside,
- wherein the first sealing surface (206) lies against a fastening means (195) which fastens the bearing arrangement (95) to the carrier unit (100),
- wherein the second sealing surface (207) lies against the rolling body (110) on the inside,
- wherein the sealing outer surface (208) is arranged on a side of the first sealing element (205) facing away from the bearing space (125),
- wherein the sealing outer surface (208) is configured in such a manner that a first transition (209) between the fastening means (195) and the sealing outer surface (208) and a second transition (211) between an end surface (212) of the rolling body (110), which end surface faces the first sealing element (205), and the sealing outer surface (208) are substantially stepless,
- wherein the sealing outer surface (208) is of substantially concave configuration with respect to the bearing space (125), wherein advantageously the first sealing element (205) is of wider configuration on the first sealing surface (206) in the axial direction with respect to the axis of rotation (105) than on the second sealing surface (207).

8. Conveying device (20) according to Claim 7,
- wherein the carrier unit (100) comprises a second sealing element (225),
- wherein the second sealing element (225) is arranged between the carrier (130) and the fastening means (195),
- wherein the second sealing element (225) seals the carrier (130) and the fastening means (195) in relation to the environment.

9. Conveying device (20) according to any one of the preceding claims,
- wherein a gap (210) is arranged between the rolling unit (85, 90) and the carrier unit (100),
- wherein the gap (210) has a gap width (s) in the axial direction with respect to the axis of rotation (105),
- wherein the gap width (s) is selected in such a manner that a mechanical cleaning device for the mechanical cleaning of the gap (210) can be introduced into the gap (210).

10. Conveying device (20) according to Claim 9,
- wherein the gap (210) comprises a radially on the inside arranged rounded portion (220),
- wherein the rounded portion (220) is substantially bounded by the first sealing element (205) and the second sealing element (225),
- wherein the rounded portion (220) has a radius (r2),
- wherein the radius (r2) is at least 4 mm, preferably at least 6 mm.

11. Conveying device (20) according to any one of the preceding claims,
- wherein the carrier unit (100) has a holding element (240, 241) and a further sealing element (245),
- wherein the receptacle (265) is arranged in the holding element (240, 241),
- wherein the further sealing element (245) is arranged between the holding element (240, 241) and the carrier (130),
- and/or
- wherein the carrier (130) and/or the fastening means (195) and/or the further closure element (270) comprise/comprises at least one of the following first materials:
- stainless steel,
- V4A steel,
- plastic,
- polyethylene,
- polytetrafluoroethylene;
- wherein the rolling unit (85, 90) comprises at least one of the following second materials:
- plastic,
- polyketone;
- wherein the first and/or second sealing element (205, 255) comprise/comprises at least one of the following third materials:
- plastic,
- polytetrafluoroethylene,
- fluorinated rubber;
- wherein the covering element (305) comprises at least one of the following fourth materials:
- plastic,
- polyester,
- nonmetal,
- nonmagnetic material.

12. Conveying device (20) according to any one of the preceding claims,
- having a tab (78),
- wherein the tab (78) comprises a housing (285) and a signal influencer (280),
- wherein the housing (285) has a housing interior (290) in which the signal influencer (280) is arranged,
- wherein the housing (285) comprises a frame (295) and at least one covering element (305),
- wherein the frame (295) bounds the housing interior (290) in sections,
- wherein the covering element (305) is arranged laterally on the frame (295) and closes the housing interior (290).

13. Conveying device (20) according to Claim 14,
- wherein the covering element (305) is of thin-walled configuration, preferably in the manner of a film,
- wherein the covering element (305) preferably has a thickness (d_{A}) within a range of 0.1 mm to 0.8 mm,
- wherein the covering element (305) is connected preferably in an integrally bonded manner to the frame (295), preferably adhesively bonded thereto,
and/or
- wherein the frame (295) and the holding element (241) are formed integrally and from the same material.

14. Linear transport system (10)
- comprising at least one drive module (25, 30), a running rail (35) and a conveying device (20),
- wherein the conveying device (20) is formed according to any one of Claims 4 to 13,
- wherein the running rail (35) has at least one rail running surface (36, 37),
- wherein the running surface (120) rests on the rail running surface (36, 37) and the running rail (35) guides the conveying device (20) in a movement,
- wherein the carrier unit (100) engages around the running rail (35) and the drive module (25, 30) at least in sections,
- wherein the drive module (25, 30) has a control unit (40) and a stator (65) having a multiplicity of windings,
- wherein the control unit (40) is connected to the windings and is configured to activate the windings in such a manner that the stator (65) switchably provides the magnetic moving field,
- wherein the moving field is operatively connected to the magnet arrangement (80) and the moving field moves the conveying device (20) along the running rail (35).

## Revendications

1. Dispositif de transport (20) pour un système de transport linéaire (10),
- le dispositif de transport (20) comprenant au moins une unité de roulement (85, 90), un agencement d'aimant (80) et une unité de support (100),
- l'unité de support (100) étant réalisée en forme de U et présentant sur le côté extérieur un côté extérieur (180) ainsi que sur le côté intérieur un côté intérieur (171),
- le côté intérieur (171) délimitant un espace de réception (165) pour recevoir un rail de roulement (35) du système de transport linéaire (10),
- l'unité de roulement (85, 90) étant agencée à distance du côté intérieur (171) dans l'espace de réception (165),
- le côté intérieur (171) et/ou le côté extérieure(180) étant réalisés sous forme lisse,
- l'unité de support (100) présentant un logement (265),
- une section d'agencement d'aimant (81) de l'agencement d'aimant (80) étant agencée dans le logement (265),
- **caractérisé en ce que**
- le logement (265) est fermé sur un côté tourné vers un module d'entraînement (25, 30) du système de transport linéaire (10) au moyen d'un autre élément de fermeture (270) relié à l'unité de support (100) par liaison de matière de telle sorte qu'une pénétration d'humidité dans la section d'agencement d'aimant (81) de l'agencement d'aimant (80) est évitée,
- l'autre élément de fermeture (270) étant réalisé à paroi mince, en forme de feuille, et présentant une épaisseur qui se situe dans une plage de 0,1 mm à 0,8 mm,
- l'autre élément de fermeture (270) recouvrant l'agencement d'aimant (80),
- un matériau de l'autre élément de fermeture (270) étant choisi de telle sorte qu'un champ magnétique mobile et la section d'agencement d'aimant (81) peuvent interagir pour entraîner le dispositif de transport (20).

2. Dispositif de transport (20) selon la revendication 1,
- l'unité de support (100) présentant un support (130) avec une première section de support (140) et au moins une deuxième section de support (145),
- la deuxième section de support (145) étant agencée de manière inclinée par rapport à la première section de support (140) et étant reliée à la première section de support (140),
- le côté intérieur (171) sur la première section de support (140) et sur la deuxième section de support (145) étant réalisé sous forme plane au moins par sections,
- le côté intérieur (171) entre la première section de support (140) et la deuxième section de support (145) étant réalisé sous forme courbée de telle sorte que le côté intérieur (171) passe en continu entre la première section de support (140) et la deuxième section de support (145).

3. Dispositif de transport selon la revendication 2,
- le support (130) étant réalisé en forme de U et sous forme symétrique et présentant au moins une troisième section de support (150) et une quatrième section de support (155),
- la troisième section de support étant agencée sur un côté de la deuxième section de support (145) détourné de la première section de support (140) et étant reliée à la deuxième section de support (145),
- la troisième section de support (150) étant agencée de manière inclinée par rapport à la première section de support (140) et à la deuxième section de support (145),
- la quatrième section de support (155) étant agencée sur un côté de la troisième section de support (150) détourné de la deuxième section de support (145) et étant reliée à la troisième section de support (150),
- la quatrième section de support (155) étant agencée de manière inclinée par rapport à la troisième section de support (150),
- la deuxième section de support (145) et la quatrième section de support (155) étant agencées sur un côté de la troisième section de support (150) tourné vers l'espace de réception (165),
- la quatrième section de support (155) délimitant, sur un côté détourné de la première section de support (140), une ouverture de réception (170) de l'espace de réception (165),
- le côté intérieur (171) s'étendant vers l'intérieur sur les sections de support (140, 145, 150, 155) et étant réalisé sous forme continue.

4. Dispositif de transport (20) selon l'une quelconque des revendications précédentes,
- le dispositif de transport (20) comprenant un agencement de palier (95),
- l'agencement de palier (95) supportant l'unité de roulement (85, 90) de manière rotative autour d'un axe de rotation (105) sur l'unité de support (100),
- l'unité de roulement (85, 90) comprenant un corps de roulement (110), un élément de fermeture (115) et un espace de palier (125),
- le corps de roulement (110) présentant une surface de roulement (120) sur sa périphérie et délimitant l'espace de palier (125) sur le côté intérieur,
- l'agencement de palier (95) étant agencé dans l'espace de palier (125),
- la surface de roulement (120) étant réalisée pour s'appliquer contre une surface de roulement de rail (36, 37) du rail de roulement (35) du système de transport linéaire (10) et pour guider le dispositif de transport (20) le long du rail de roulement (35),
- l'élément de fermeture (115) étant relié frontalement au corps de roulement (110) et étanchéifiant frontalement l'espace de palier (125) par rapport à un environnement (126),
- de préférence, l'élément de fermeture (115) étant réalisé sous forme de coupelle et recouvrant entièrement frontalement le corps de roulement (110),
- de préférence, l'élément de fermeture (115) et le corps de roulement (110) étant réalisés d'une seule pièce et dans le même matériau.

5. Dispositif de transport (20) selon la revendication 4,
- le corps de roulement (110) et l'élément de fermeture (115) étant exempts de contre-dépouilles et/ou de coins et/ou de joints sur le côté extérieur et/ou
- étant réalisés sous forme essentiellement lisse.

6. Dispositif de transport (20) selon la revendication 4 ou 5,
- l'unité de roulement (85, 90) présentant un premier élément d'étanchéité (205),
- le premier élément d'étanchéité (205) fermant l'espace de palier (125) sur un côté du corps de roulement (110) détourné de l'élément de fermeture (115).

7. Dispositif de transport selon la revendication 6,
- le premier élément d'étanchéité (205) présentant radialement à l'intérieur une première surface d'étanchéité (206), radialement à l'extérieur une deuxième surface d'étanchéité (207) et une surface extérieure d'étanchéité (208),
- la première surface d'étanchéité (206) s'appliquant sur un moyen de fixation (195) qui fixe l'agencement de palier (95) sur l'unité de support (100),
- la deuxième surface d'étanchéité (207) s'appliquant sur le corps de roulement (110) du côté intérieur,
- la surface extérieure d'étanchéité (208) étant agencée sur un côté du premier élément d'étanchéité (205) détourné de l'espace de palier (125),
- la surface extérieure d'étanchéité (208) étant conçue de telle sorte qu'une première transition (209) entre le moyen de fixation (195) et la surface extérieure d'étanchéité (208) ainsi qu'une deuxième transition (211) entre une surface frontale (212) du corps de roulement (110) tournée vers le premier élément d'étanchéité (205) et la surface extérieure d'étanchéité (208) sont essentiellement continues,
- la surface extérieure d'étanchéité (208) étant réalisée sous forme essentiellement concave par rapport à l'espace de palier (125), le premier élément d'étanchéité (205) étant avantageusement réalisé sous forme plus large sur la première surface d'étanchéité (206) que sur la deuxième surface d'étanchéité (207) dans la direction axiale par rapport à l'axe de rotation (105) .

8. Dispositif de transport (20) selon la revendication 7,
- l'unité de support (100) comprenant un deuxième élément d'étanchéité (225),
- le deuxième élément d'étanchéité (225) étant agencé entre le support (130) et le moyen de fixation (195),
- le deuxième élément d'étanchéité (225) étanchéifiant le support (130) et le moyen de fixation (195) par rapport à l'environnement.

9. Dispositif de transport (20) selon l'une quelconque des revendications précédentes,
- une fente (210) étant agencée entre l'unité de roulement (85, 90) et l'unité de support (100),
- la fente (210) présentant une largeur de fente (s) dans la direction axiale par rapport à l'axe de rotation (105),
- la largeur de fente (s) étant choisie de telle sorte qu'un dispositif de nettoyage mécanique peut être introduit dans la fente (210) pour le nettoyage mécanique de la fente (210) .

10. Dispositif de transport (20) selon la revendication 9,
- la fente (210) comprenant une section arrondie (220) agencée radialement vers l'intérieur,
- la section arrondie (220) étant essentiellement délimitée par le premier élément d'étanchéité (205) et le deuxième élément d'étanchéité (225),
- la section arrondie (220) présentant un rayon (r2),
- le rayon (r2) étant d'au moins 4 mm, de préférence d'au moins 6 mm.

11. Dispositif de transport (20) selon l'une quelconque des revendications précédentes,
- l'unité de support (100) présentant un élément de maintien (240, 241) et un autre élément d'étanchéité (245),
- le logement (265) étant agencé dans l'élément de maintien (240, 241),
- l'autre élément d'étanchéité (245) étant agencé entre l'élément de maintien (240, 241) et le support (130),
- et/ou
- le support (130) et/ou le moyen de fixation (195) et/ou l'autre élément de fermeture (270) présentant au moins l'un des premiers matériaux suivants :
- acier inoxydable,
- acier V4A,
- plastique,
- polyéthylène,
- polytétrafluoroéthylène ;
- l'unité de roulement (85, 90) présentant au moins l'un des deuxièmes matériaux suivants :
- plastique,
- polycétone ;
- le premier et/ou le deuxième élément d'étanchéité (205, 255) présentant au moins l'un des troisièmes matériaux suivants :
- plastique,
- polytétrafluoroéthylène,
- caoutchouc fluoré ;
- l'élément de recouvrement (305) présentant au moins l'un des quatrièmes matériaux suivants :
- plastique,
- polyester,
- non-métal,
- matériau non magnétique.

12. Dispositif de transport (20) selon l'une quelconque des revendications précédentes,
- présentant un talon (78),
- le talon (78) comprenant un boîtier (285) et un dispositif d'influence de signal (280),
- le boîtier (285) présentant un espace intérieur de boîtier (290) dans lequel le dispositif d'influence de signal (280) est agencé,
- le boîtier (285) comprenant un cadre (295) et au moins un élément de recouvrement (305),
- le cadre (295) délimitant par sections l'espace intérieur de boîtier (290),
- l'élément de recouvrement (305) étant agencé latéralement sur le cadre (295) et fermant l'espace intérieur de boîtier (290).

13. Dispositif de transport (20) selon la revendication 12,
- l'élément de recouvrement (305) étant réalisé à paroi mince, de préférence en forme de feuille,
- l'élément de recouvrement (305) présentant de préférence une épaisseur (d_{A}) dans une plage de 0,1 mm à 0,8 mm,
- l'élément de recouvrement (305) étant de préférence relié au cadre (295) par liaison de matière, de préférence collé,
et/ou
- le cadre (295) et l'élément de maintien (241) étant réalisés d'une seule pièce et dans le même matériau.

14. Système de transport linéaire (10)
- avec au moins un module d'entraînement (25, 30), un rail de roulement (35) et un dispositif de transport (20),
- le dispositif de transport (20) étant réalisé selon l'une quelconque des revendications 4 à 13,
- le rail de roulement (35) présentant au moins une surface de roulement de rail (36, 37),
- la surface de roulement (120) reposant sur la surface de roulement de rail (36, 37) et le rail de roulement (35) guidant le dispositif de transport (20) dans un mouvement,
- l'unité de support (100) entourant au moins par sections le rail de roulement (35) et le module d'entraînement (25, 30),
- le module d'entraînement (25, 30) présentant un appareil de commande (40) et un stator (65) avec une pluralité d'enroulements,
- l'appareil de commande (40) étant relié aux enroulements et réalisé pour commander les enroulements de telle sorte que le stator (65) fournisse de manière commutable le champ magnétique mobile,
- le champ mobile étant en liaison active avec l'agencement d'aimant (80) et le champ mobile déplaçant le dispositif de transport (20) le long du rail de roulement (35).
